(19) Europäisches Patentamt
European Patent Office
Office européen des brevets

(11) EP 2 770 033 B1

(12) EUROPEAN PATENT SPECIFICATION

(45) Date of publication and mention of the grant of the patent:
**11.01.2017 Bulletin 2017/02**

(21) Application number: **12841814.2**

(22) Date of filing: **15.10.2012**

(51) Int Cl.:
***C09J 133/06*** (2006.01) ***C09J 7/02*** (2006.01)
***C09J 11/06*** (2006.01) ***C09J 133/02*** (2006.01)

(86) International application number:
**PCT/JP2012/076593**

(87) International publication number:
**WO 2013/058208 (25.04.2013 Gazette 2013/17)**

(54) **REMOVABLE WATER-DISPERSIBLE ACRYLIC-BASED ADHESIVE COMPOSITION AND ADHESIVE SHEET**

ENTFERNBARE IN WASSER DISPERGIERBARE HAFTMITTELZUSAMMENSETZUNG AUF ACRYLBASIS UND HAFTFOLIE

COMPOSITION D'ADHÉSIF ACRYLIQUE AMOVIBLE SUSCEPTIBLE DE DISPERSION DANS L'EAU ET FEUILLE ADHÉSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2011 JP 2011229878**
**25.04.2012 JP 2012100343**
**11.10.2012 JP 2012225667**

(43) Date of publication of application:
**27.08.2014 Bulletin 2014/35**

(73) Proprietor: **Nitto Denko Corporation**
**Ibaraki-shi, Osaka 567-8680 (JP)**

(72) Inventors:
- **TAKASHIMA, Kyoko**
**Ibaraki-shi**
**Osaka 567-8680 (JP)**
- **MITSUI, Kazuma**
**Ibaraki-shi**
**Osaka 567-8680 (JP)**
- **MORIMOTO, Yu**
**Ibaraki-shi**
**Osaka 567-8680 (JP)**
- **AMANO, Tatsumi**
**Ibaraki-shi**
**Osaka 567-8680 (JP)**
- **YONEZAKI, Kousuke**
**Ibaraki-shi**
**Osaka 567-8680 (JP)**

(74) Representative: **Grünecker Patent- und Rechtsanwälte**
**PartG mbB**
**Leopoldstraße 4**
**80802 München (DE)**

(56) References cited:
**WO-A1-93/14161**
**JP-A- 2004 300 269**
**JP-A- 2006 008 831**
**JP-A- 2010 143 985**
**JP-A- 2011 093 956**
**JP-A- 2004 300 269**
**JP-A- 2006 008 831**
**JP-A- 2007 217 594**
**JP-A- 2010 143 985**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 770 033 B1

## Description

### Technical Field

The present invention relates to a water-dispersible acrylic pressure-sensitive adhesive composition for preparing a removable pressure-sensitive adhesive layer. The present invention also relates to a pressure-sensitive adhesive sheet including a pressure-sensitive adhesive layer comprising the adhesive composition.

### Background Art

In steps of producing and processing optical components (optical materials) including optical films such as polarizing plates, retardation plates, and anti-reflective plates, a surface protective film is disposed on a surface of an optical component in order to protect the surface of the optical component against scratch damage, dirt, and cracking and to improve cutting processability (see Patent Literatures 1 and 2). A typical surface protective film is a pressure-sensitive removable adhesive sheet comprising a plastic film substrate and a removable adhesive layer disposed on the surface thereof.

In applications of surface protective films, solvent-based acrylic adhesive agents have been used (see Patent Literatures 1 and 2). These solvent-based acrylic adhesive agents, which contain organic solvents, have been replaced with water-dispersible acrylic adhesive agents from the viewpoint of working environments during application of the adhesive agent (see Patent Literatures 3 to 5).

In the field of surface protective films (especially in the field of surface protective films for optical components), the surface of an adherent is contaminated by transfer of the components contained in the adhesive layer, and such contamination affects optical characteristics of the optical component. Consequently, adhesive agents and adhesive layers having low contamination to the adherent have been strongly demanded.

For a water-dispersible acrylic adhesive agent, an emulsifier, one of the components, readily segregates at the interface of the adhesive layer, and transfers to the surface of the adherent to contaminate the adherent.

In addition, these surface protective films bonded to optical components need to exhibit sufficient adhesiveness to the films. The films also need to have high release property (removability) because the films are removed after the step of producing the optical component.

### Citation r list

JP 2011 093956 discloses a peelable adhesive of ethylhexyl acrylate, methyl methacrylate, methacrylic acid, acrylic acid, emulsifier of polyoxyethylene alkyl ether sodium sulfate (an anionic form non-reactive emulsifier "Ramtel E-118B"), allyl alkyl sodium sulfosuccinate (an anionic form reactive emulsifying agent "Eleminol JS-2" and epoxy-type crosslinking agent ["Denacol EX-313"].

Acetylene diol is disclosed in [0050].

JP 2010 143985 disclose peeling type adhesive material, acrylic type emulsions and anionic reactive emulsifying agent.

WO 93/14161 discloses peelable acrylic adhesives containing copolymerisable sodium salt of styrene surfactant and internal and external crosslinking agents.

Other aqueous adhesive compositions are disclosed in JP 2004 300269 and JP 2006 008831.

### Patent Literature

Patent Literature 1: Japanese Patent Application Laid-Open No. 11-961
Patent Literature 2: Japanese Patent Application Laid-Open No. 2001-64607
Patent Literature 3: Japanese Patent Application Laid-Open No. 2001-131512
Patent Literature 4: Japanese Patent Application Laid-Open No. 2003-27026
Patent Literature 5: Japanese Application No. 3810490

### Summary of Invention

### Technical Problem

An object of the present invention is to provide a removable water-dispersible acrylic pressure-sensitive adhesive

composition for preparing a removable pressure-sensitive adhesive layer having low contamination and high adhesion. Another object of the present invention is to provide a pressure-sensitive adhesive sheet including a pressure-sensitive adhesive layer comprising the adhesive composition.

Solution to Problem

As a result of extensive research to achieve the objects, the present inventors found that a removable water-dispersible acrylic pressure-sensitive adhesive composition has low contamination which contains an acrylic emulsion polymer including specific monomers as essential raw material constitutive monomers and prepared by polymerization of a raw material constitutive monomers with a specific reactive surfactant, and have completed the present invention.

The present invention provides a removable water-dispersible acrylic pressure-sensitive adhesive composition comprising an acrylic emulsion polymer (A) including an alkyl (meth)acrylate ester and a carboxyl-containing unsaturated monomer as essential raw material constitutive monomers and prepared by polymerization with a reactive surfactant containing no oxyalkylene group.

Preferably, the reactive surfactant containing no oxyalkylene group is an anionic reactive surfactant containing no oxyalkylene group.

A 1 wt% aqueous solution of reactive surfactant containing no oxyalkylene group has a surface tension of preferably 39. 0 mN/m or less, and more preferably 25. 0 to 39. 0 mN/m at a surface age of 800 msec or less.

Preferably, a content of the carboxyl group-containing unsaturated monomer is 0.5 to 10 percent by weight based on the total amount (100 wt%) of the raw material constitutive monomers for preparing the acrylic emulsion polymer (A).

The proportion of the reactive surfactant containing no oxyalkylene group is preferably 0.1 to 10 parts by weight, more preferably 0.5 to 6 parts by weight, still more preferably 1 to 4.5 parts by weight, and most preferably 1 to 3 parts by weight of the total amount (100 parts by weight) of the raw material constitutive monomers for preparing the acrylic emulsion polymer (A).

Preferably, the removable water-dispersible acrylic pressure-sensitive adhesive composition in the form of a pressure-sensitive adhesive layer has a maximum loss tangent of 1.08 or less between -60°C and -20°C and a shear storage modulus of $2.90\times10^5$ Pa or less at 20°C which are determined by a dynamic viscoelastic measurement.

Preferably, the alkyl (meth)acrylate ester contains an alkyl (meth)acrylate ester having an alkyl group having 8 to 12 carbon atoms.

Preferably, the removable water-dispersible acrylic pressure-sensitive adhesive composition in the form of a pressure-sensitive adhesive layer has a loss tangent of 0.08 or more at 20°C which is measured by a dynamic viscoelastic measurement.

Preferably, the ratio (i) / (ii) of the adhesive strength (i) to triacetylcellulose to the adhesive strength (ii) to a rough surface having a surface average roughness Ra of 200 to 450 nm of the removable water-dispersible acrylic pressure-sensitive adhesive composition in the form of a pressure-sensitive adhesive layer is 3 or less.

Preferably, the removable water-dispersible acrylic pressure-sensitive adhesive composition further comprises a water-insoluble crosslinking agent (B).

Preferably, the water-insoluble crosslinking agent (B) has two or more functional groups reactive with the carboxyl groups in one molecule.

Preferably, the removable water-dispersible acrylic pressure-sensitive adhesive composition further comprises an acetylene diol compound (C).

Preferably, the acetylene diol compound (C) has an HLB value of less than 13.

Preferably, the removable water-dispersible acrylic pressure-sensitive adhesive composition comprises a surfactant (D) having a number average molecular weight of 1200 to 4000. Preferably, the surfactant (D) having a number average molecular weight of 1200 to 4000 is a surfactant selected from the group consisting of compounds represented by Formulae (I), (II), and (III):

$$R^aO\text{-}(PO)_{n1}(EO)_{m1}\text{-}CO\text{-}R^b \qquad (I)$$

where PO represents an oxypropylene group; EO represents an oxyethylene group; $R^a$ represents an alkyl or alkenyl group having 8 to 22 carbon atoms or an alkylcarbonyl or alkenylcarbonyl group having 8 to 21 carbon atoms; $R^b$ represents an alkyl or alkenyl group having 8 to 21 carbon atoms; $m_1$ represents an integer of 0 to 15; $n_1$ represents an integer of 1 or more; the form of addition of EO and PO is random addition or block addition;

$$R^cO\text{-}(PO)_{n2}(EO)_{m2}\text{-}H \qquad (II)$$

where PO represents an oxypropylene group; EO represents an oxyethylene group; $R^c$ represents a nonylphenyl group,

an octylphenyl group, or an alkyl or alkenyl group having 8 to 22 carbon atoms; $m_2$ represents an integer of 0 to 20; $n_2$ represents an integer of 1 or more; the form of addition of EO and PO is random addition or block addition;

$$HO\text{-}(PO)_{n3}(EO)_{m3}\text{-}H \qquad (III)$$

where PO represents an oxypropylene group; EO represents an oxyethylene group; $m_3$ represents an integer of 0 to 40; $n_3$ represents an integer of 1 or more; the form of addition of EO and PO is random addition or block addition.

Preferably, a content of propylene oxide in the surfactant (D) having a number average molecular weight of 1200 to 4000 is 70 to 100 wt%.

The present invention also provides a pressure-sensitive adhesive sheet comprising a substrate and a pressure-sensitive adhesive layer disposed at least one side of the substrate, the pressure-sensitive adhesive layer comprising the removable water-dispersible acrylic pressure-sensitive adhesive composition.

Preferably, the pressure-sensitive adhesive sheet is a surface protective film for an optical component.

The present invention provides an optical component comprising the pressure-sensitive adhesive sheet.

## Advantageous Effects of Invention

The adhesive composition according to the present invention is water-dispersible and has the configuration described above. The pressure-sensitive adhesive layer comprising such an adhesive composition and the pressure-sensitive adhesive sheet including the pressure-sensitive adhesive layer exhibit high removability and adhesiveness, and attain low contamination of the surface of the adherent after the adhesive sheet is removed. Consequently, the adhesive composition according to the present invention is useful in the field of protection of surfaces of optical components.

## Description of Embodiments

The removable water-dispersible acrylic pressure-sensitive adhesive composition (acrylic water-dispersible pressure-sensitive removable composition) (also simply referred to as "adhesive composition") according to the present invention contains an acrylic emulsion polymer (A) as an essential component. Preferably, the adhesive composition according to the present invention contains, but should not be limited to, a water-insoluble crosslinking agent (B), an acetylene diol compound (C), and a surfactant (D) having a number average molecular weight of 1200 to 4000. The adhesive composition according to the present invention may further contain a crosslinking agent other than the water-insoluble crosslinking agent (B) (referred to as "additional crosslinking agent") and other optional additives.

### [Acrylic emulsion polymer (A)]

The acrylic emulsion polymer (A) in the adhesive composition according to the present invention is a polymer including an alkyl (meth)acrylate ester ((meth)acrylic alkyl ester) and a carboxyl group-containing unsaturated monomer as essential raw material constitutive monomers (raw material monomer components) . That is, the acrylic emulsion polymer (A) is prepared from a monomer mixture comprising an alkyl (meth)acrylate ester and a carboxyl group-containing unsaturated monomer as essential monomer components. These acrylic emulsion polymers (A) may be used alone or in combination. In the present invention, the term "(meth)acrylate" refers to "acrylate" and/or "methacrylate."

The alkyl (meth) acrylate ester is used as one main monomer component of the acrylic emulsion polymer (A), and mainly plays a role in exhibiting basic characteristics as the pressure-sensitive adhesive agent (or pressure-sensitive adhesive layer) such as adhesiveness and removability. Among these, the alkyl acrylate ester will give flexibility to the polymer used for preparing the pressure-sensitive adhesive layer to attain the adhesion and tackiness of the pressure-sensitive adhesive layer while the alkyl methacrylate ester will give hardness to the polymer used for preparing the pressure-sensitive adhesive layer to adjust the removability of the pressure-sensitive adhesive layer. Non-limiting examples of the alkyl (meth)acrylate ester include alkyl (meth)acrylate esters having a linear, branched, or cyclic alkyl group having 1 to 16 (preferably 2 to 12, more preferably 4 to 8, or most preferably 8 to 12) carbon atoms.

Among these, preferred alkyl acrylate esters are alkyl acrylate esters having an alkyl group having 2 to 14 (preferably 4 to 8, or more preferably 8 to 12) carbon atoms, and examples thereof include alkyl acrylate esters having a linear or branched alkyl group, such as n-butyl acrylate, isobutyl acrylate, s-butyl acrylate, isoamyl acrylate, hexyl acrylate, heptyl acrylate, octyl acrylate, 2-ethylhexyl acrylate, isooctyl acrylate, nonyl acrylate, and isononyl acrylate. Among these, preferred are 2-ethylhexyl acrylate and n-butyl acrylate.

Preferred alkyl methacrylate esters are alkyl methacrylate esters having an alkyl group having 2 to 16 (preferably 4 to 8, or more preferably 8 to 12) carbon atoms, and examples thereof include alkyl methacrylate esters having a linear or branched alkyl group, such as ethyl methacrylate, propyl methacrylate, isopropyl methacrylate, n-butyl methacrylate,

isobutyl methacrylate, s-butyl methacrylate, and t-butyl methacrylate and cycloalkyl methacrylate esters, such as cyclohexyl methacrylate, bornyl methacrylate, and isobornyl methacrylate. Among these, preferred is n-butyl methacrylate.

Methyl methacrylate, methyl acrylate, and/or isobornyl acrylate may be used (contained) to improve the appearance of the pressure-sensitive adhesive layer described later.

The alkyl (meth) acrylate esters can be selected according to a desired tackiness, for example, and may be used alone or in combination. Namely, the alkyl (meth) acrylate ester may be a single substance or a mixture of alkyl (meth) acrylate esters.

Examples of the alkyl (meth)acrylate esters include an alkyl (meth)acrylate ester containing only alkyl (meth)acrylate ester having a linear or branched alkyl group having 8 to 12 carbon atoms and an alkyl (meth)acrylate ester (mixture) containing two or more alkyl (meth)acrylate esters having a linear or branched alkyl group having 8 to 12 carbon atoms.

Preferably, the alkyl (meth)acrylate esters include methyl (meth)acrylate from the viewpoint of an improvement in the appearance of the pressure-sensitive adhesive sheet (pressure-sensitive adhesive layer) prepared from the adhesive composition according to the present invention. More preferably, the alkyl (meth)acrylate esters include an alkyl (meth) acrylate ester having an alkyl group having 8 to 12 carbon atoms and methyl (meth)acrylate from the viewpoint of high adhesion, especially high adhesion to an irregular surface, and high followability (fittability) to the irregular surface.

The content of the alkyl (meth)acrylate ester is, but should not be limited to, preferably 70 to 99.5 wt%, more preferably 85 to 99 percent by weight (wt%), and most preferably 91 to 98 wt% of the total amount (total of the raw material constitutive monomers) (100 wt%) of the raw material constitutive monomers for preparing the acrylic emulsion polymer (A). At a content more than 99.5 wt%, the content of the carboxyl group-containing unsaturated monomer relatively decreases, which may reduce the anchoring characteristics and the stability of the emulsion and increase the risk of contamination of the pressure-sensitive adhesive layer prepared from the adhesive composition. At a content less than 70 wt%, the adhesiveness and removability of the pressure-sensitive adhesive layer may reduce. The ratio of the content of the alkyl acrylate ester to that of the alkyl methacrylate ester in the alkyl (meth)acrylate ester (content of alkyl acrylate ester:content of alkyl methacrylate ester) is preferably 100:0 to 30: 70 (weight ratio), and more preferably 100:0 to 50:50, although the ratio is non-attributive.

The carboxyl group-containing unsaturated monomer can be formed into protective layers of surfaces of emulsion particles composed of the acrylic emulsion polymer (A), and the protective layers can protect the particles against shear failure. This protection function is enhanced by neutralization of the carboxyl group with a base. The stability of the particles against shear failure is usually referred to as mechanical stability. The carboxyl group-containing unsaturated monomer used in combination with one or two or more of polyfunctional compounds reactive with the carboxyl group (such as polyfunctional epoxy compounds) can also act as crosslinking points while the pressure-sensitive adhesive layer is being produced by removing water. The polyfunctional compound can also enhance the adhesion (anchoring characteristics) between the pressure-sensitive adhesive layer and the substrate. Examples of such a carboxyl group-containing unsaturated monomer include (meth)acrylic acid (acrylic acid, methacrylic acid), itaconic acid, maleic acid, fumaric acid, crotonic acid, carboxyethyl acrylate, and carboxypentyl acrylate. The carboxyl group-containing unsaturated monomer includes acid anhydride group-containing unsaturated monomers such as maleic anhydride and itaconic anhydride. Among these, acrylic acid is preferred because the relative concentration on the surface of the particle is high and the protective layer is readily produced in a higher density.

The content of the carboxyl group-containing unsaturated monomer is, but should not be limited to, preferably 0.5 to 10 wt%, more preferably 1 to 5 wt%, and most preferably 2 to 4 wt% based on the total amount (100 wt%) of the raw material constitutive monomers for preparing the acrylic emulsion polymer (A) (total of the raw material constitutive monomers). At a content more than 10 wt%, the viscosity may increase as a result of polymerization of the carboxyl group-containing unsaturated monomer (such as acrylic acid), which is typically water-soluble, in water. Furthermore, after formation of the pressure-sensitive adhesive layer, the interaction with functional groups contained in the surface of a polarizing plate as an adherent may increase, leading to an increase in the adhesive strength over time and difficulties in removal of the adhesive sheet. At a content less than 0.5 wt%, the mechanical stability of the emulsion particles may reduce. The adhesion (anchoring characteristics) between the pressure-sensitive adhesive layer and the substrate may reduce, causing adhesive residues.

To give specific functions, the monomer components (raw material constitutive monomers) for preparing the acrylic emulsion polymer (A) may also contain optional monomer components other than the alkyl (meth)acrylate esters and the carboxyl group-containing unsaturated monomer. The optional monomer components are exemplified as follows: In order to enhance the aggregation, amide group-containing monomers, such as (meth)acrylamide, N,N-diethyl(meth)acrylamide, N-isopropyl(meth)acrylamide, and amino group-containing monomers, such as N,N-dimethylaminoethyl (meth)acrylate and N,N-dimethylaminopropyl (meth)acrylate each may be added (used) in a proportion of approximately 0.1 to 15 wt%. In order to adjust the refractive index or provide reworkability, aryl

(meth) acrylate esters, such as phenyl (meth) acrylate; and vinyl esters, such as vinyl acetate and vinyl propionate; and styrene monomers, such as styrene, each may be added (used) in a proportion of 15 wt% or less. In order to enhance the internal crosslinking of the emulsion particles and the aggregation, epoxy group-containing monomers,

such as glycidyl (meth)acrylate and allyl glycidyl ether, and polyfunctional monomers, such as trimethylolpropane tri(meth)acrylate and divinylbenzene, each may be added (used) in a proportion of less than 5 wt%. In order to form hydrazide crosslinks with a hydrazide crosslinking agent in combination to attain lower contamination in particular, a keto group-containing unsaturated monomer such as diacetone acrylamide (DAAM), allyl acetoacetate, and 2- (acetoacetoxy) ethyl (meth) acrylate may be added (used) in a proportion of less than 10 wt% (preferably 0.5 to 5 wt%).

The optional monomer components may be hydroxyl group-containing unsaturated monomers, such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, vinyl alcohol, allyl alcohol, 2-hydroxyethyl vinyl ether, 4-hydroxybutyl vinyl ether, and diethylene glycol monovinyl ether. Preferably, a small amount of the hydroxyl group-containing unsaturated monomer is added (used) from the viewpoint of a reduction in white contamination. Specifically, the amount of the hydroxyl group-containing unsaturated monomer to be added is preferably less than 1 wt%, more preferably less than 0.1 wt%, and most preferably substantially zero (for example, less than 0.05 wt%). For the purpose of introduction of a crosslinking point for the crosslinking of the hydroxyl group and an isocyanate group or for the metal crosslinking, approximately 0.01 to 10 wt% hydroxyl group-containing unsaturated monomer may be added (used) .

The amount of the optional monomer component to be added (used) is an amount relative to the total amount (100 wt%) of the raw material constitutive monomers for preparing the acrylic emulsion polymer (A) (total of the raw material constitutive monomers).

Especially from the viewpoint of an improvement in the appearance of the pressure-sensitive adhesive sheet (pressure-sensitive adhesive layer) prepared from the adhesive composition according to the present invention, it is preferred that the raw material constitutive monomer component (raw material monomer) for preparing the acrylic emulsion polymer (A) be at least one monomer selected from the group consisting of methyl methacrylate, isobornyl acrylate, N,N-diethylacrylamide, and vinyl acetate. More preferred is methyl methacrylate. The content of the monomer (monomer selected from the group consisting of methyl methacrylate, isobornyl acrylate, N,N-diethylacrylamide, and vinyl acetate) of the total amount (100 wt%) of the raw material constitutive monomers for preparing the acrylic emulsion polymer (A) (total of the raw material monomers) is preferably 0.5 to 15 wt%, more preferably 1 to 10 wt%, and most preferably 2 to 5 wt%. A content less than 0.5 wt% does not contribute to the improvement in the appearance. A content more than 15 wt% leads to preparation of hard polymer used for the pressure-sensitive adhesive layer, and thus a reduction in adhesion. If the raw material constitutive monomers for preparing the acrylic emulsion polymer (A) contain two or more monomers selected from the group consisting of methyl methacrylate, isobornyl acrylate, N,N-diethylacrylamide, and vinyl acetate, the total amount (total content) of the selected monomers should fall within this range.

The acrylic emulsion polymer (A) in the present invention is prepared by polymerization (emulsion polymerization) of the raw material constitutive monomers (monomer mixture) with a reactive surfactant containing no oxyalkylene group (emulsifier) and an optional polymerization initiator. To adjust the molecular weight of the acrylic emulsion polymer (A), a chain transfer agent may further be used.

The reactive surfactants containing no oxyalkylene group may be used alone or in combination.

Throughout the specification, the reactive surfactant refers to a surfactant containing at least one radical polymerizable functional group in one molecule. In other words, the reactive surfactant containing no oxyalkylene group has at least one radical polymerizable functional group. Examples of the radical polymerizable functional group include a vinyl group, a propenyl group, an isopropenyl group, a vinyl ether group (vinyloxy group), and an allyl ether group (allyloxy group). The reactive surfactant containing no oxyalkylene group has reactivity (has a radical polymerizable functional group). The radical polymerizable functional group reacts with a raw material constitutive monomer to be introduced in the interior of the polymer (in the polymer molecule) which structure can reduce contamination derived from the reactive surfactant.

Throughout the specification, the oxyalkylene group refers to an oxyalkylene group represented by Formula:

-RO-

where R represents an alkylene group. The reactive surfactant containing no oxyalkylene group is characterized in that no oxyalkylene group is contained. The reactive surfactant containing the oxyalkylene group has high polarity, and is readily transferred to the surface of the adherent. This transfer may cause contamination of the adherent or an increase in the adhesive strength over time.

The reactive surfactant containing no oxyalkylene group is preferably an anionic reactive surfactant (anionic reactive emulsifier) containing no oxyalkylene group from the viewpoint of stability in polymerization.

Examples of the anionic reactive surfactant containing no oxyalkylene group include compounds represented by Formula (1) :

[Formula 1]

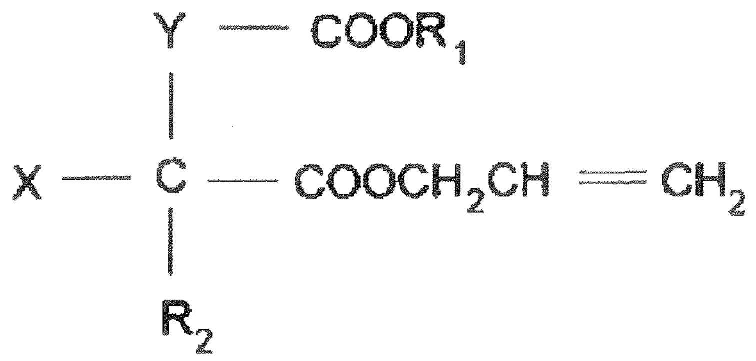

(1)

where $R_1$ and $R_2$ each represent a hydrogen atom or an alkyl group; X represents $-SO_3NH_4$ or a metal salt of $SO_3$ ($-SO_3M$ (where M is a metal atom)); Y represents an alkylene group; $R_1$ and $R_2$ may be the same or different.

Examples of the alkyl group for $R_1$ and $R_2$ include linear or branched alkyl groups having 1 to 20 carbon atoms. $R_1$ is, but should not be limited to, preferably a hydrogen atom or a linear or branched linear alkyl group having 1 to 20 carbon atoms. $R_2$ is, but should not be limited to, preferably a hydrogen atom or a linear or branched linear alkyl group having 1 to 20 carbon atoms.

Examples of the metal atom M in $-SO_3M$ for X include alkali metal atoms, alkaline earth metal atoms, and transition metal atoms. The metal atom M is, but should not be limited to, preferably sodium.

Examples of the alkylene group for Y include linear or branched alkylene groups having 1 to 20 carbon atoms. Y is, but should not be limited to, preferably an alkylene group having 1 to 10 carbon atoms, and more preferably an alkylene group having 1 to 5 carbon atoms.

The reactive surfactant containing no oxyalkylene group can be a commercially available product, such as "ELEMINOL JS-20" (trade name, available from Sanyo Chemical Industries, Ltd.), "NEOGEN AO-90" (trade name, available from Dai-ichi Kogyo Seiyaku Co., Ltd.), "Antox SAD" (trade name, available from NIPPON NYUKAZAI CO., LTD.), and "Ramtel PD-201" (tradename, available from Kao Corporation).

The proportion (amount to be used or compounded) of the reactive surfactant containing no oxyalkylene group is preferably 0.1 to 10 parts by weight, more preferably 0.5 to 6 parts by weight, still more preferably 1 to 4.5 parts by weight, and most preferably 1 to 3 parts by weight relative to 100 parts by weight of the total amount of the raw material constitutive monomers for preparing the acrylic emulsion polymer (A) (total of the raw material monomers). At a proportion more than 10 parts by weight, the aggregation of the pressure-sensitive adhesive agent (pressure-sensitive adhesive layer) may reduce, accelerating the contamination of the adherent or causing contamination by the reactive surfactant. At a proportion less than 0.1 parts by weight, the emulsion may be unstable.

The proportion of the reactive surfactant indicates the amount of the reactive surfactant relative to the total amount of the raw material constitutive monomers for preparing the acrylic emulsion polymer (A) in polymerization of the raw material constitutive monomers.

A 1 wt% aqueous solution of reactive surfactant containing no oxyalkylene group has a surface tension of, but should not be limited to, preferably 39.0 mN/m or less (for example, 24.0 to 39.0 mN/m), more preferably 25.0 to 39.0 mN/m, and most preferably 30.0 to 39.0 mN/m at a surface age of 800 msec or less. At a surface tension at a surface age of 800 msec or less of 39.0 mN/m or less, lower contamination is attained because the reactive surfactant is wetted/spread onto the surface of the adherent uniformly even if an unreacted reactive surfactant (emulsifier, reactive emulsifier) remaining after polymerization is transferred to the adherent, obscuring the surface contamination of the adherent by the reactive surfactant.

Throughout the specification, the surface tension at a surface age of 800 msec or less of the 1 wt% aqueous solution of reactive surfactant containing no oxyalkylene group is determined by the following method described in "Method for measuring surface tension at surface age of 800 msec or less of 1 wt% aqueous solution of reactive surfactant containing no oxyalkylene group."

(Method for measuring surface tension at surface age of 800 msec or less of 1 wt% aqueous solution of reactive surfactant containing no oxyalkylene group)

The reactive surfactant is diluted with ion exchange water to prepare 100 g of a 1 wt% aqueous sample solution of reactive surfactant containing no oxyalkylene group. A bubble pressure dynamic surface tensiometer BP2 (available from KRUSS GmbH) is set such that the tip of a Teflon (registered trademark) capillary having an inner diameter of 1.10

mm is positioned 1 cm below from the surface of the sample solution at 25°C, and the dynamic surface tension at a surface age of 100 to 1000 msec is measured. The lowest value of the dynamic surface tension at a surface age of 800 msec or less is defined as the "surface tension at a surface age of 800 msec or less of the 1 wt% aqueous solution of reactive surfactant containing no oxyalkylene group."

Examples of the reactive surfactant containing no oxyalkylene group having a surface tension at a surface age of 800 msec or less of 39.0 mN/m or less as the 1 wt% aqueous solution of reactive surfactant containing no oxyalkylene group include commercially available products such as "ELEMINOL JS-20" (trade name, available from Sanyo Chemical Industries, Ltd.), "Ramtel PD-201" (trade name, available from Kao Corporation), "NEOGEN AO-90" (trade name, available from Dai-ichi Kogyo Seiyaku Co., Ltd.), and "Antox SAD" (trade name, available from NIPPON

NYUKAZAI CO., LTD.).

Any polymerization initiator may be used for emulsion polymerization of the acrylic emulsion polymer (A) without limitation. Example thereof includes azo polymerization initiators, such as 2,2'-azobisisobutyronitrile, 2,2'-azobis(2-amidinopropane)dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine); persulfates, such as potassium persulfate and ammonium persulfate; peroxide polymerization initiators, such as benzoyl peroxide, t-butyl hydroperoxide, and hydrogen peroxide; and redox initiators comprising combinations of peroxides and reducing agents, such as redox polymerization initiators comprising combinations of peroxides and ascorbic acid (e.g. a combination of a hydrogen peroxide solution and ascorbic acid), combinations of peroxides and an iron (II) salt (e.g. a combination of a hydrogen peroxide solution and an iron (II) salt), and combinations of persulfates and sodium hydrogen sulfite.

These polymerization initiators may be used alone or in combination.

The proportion (amount to be used or compounded) of the polymerization initiator can be properly determined according to types of the initiators and raw material constitutive monomers. The proportion is, but should not be limited to, preferably 0.01 to 1 part by weight, and more preferably 0.02 to 0. 5 parts by weight of 100 parts by weight of the total amount of the raw material constitutive monomers for preparing the acrylic emulsion polymer (A) (total of the raw material monomers).

To adjust the molecular weight of the acrylic emulsion polymer (A), a chain transfer agent may be used in polymerization (emulsion polymerization) of the acrylic emulsion polymer (A). Any know or standard chain transfer agent may be used without limitation. Examples thereof include lauryl mercaptan, glycidyl mercaptan, mercaptoacetate, 2-mercaptoethanol, thioglycolic acid, 2-ethylhexyl thioglycolate, and 2,3-dimercapto-1-propanol. These chain transfer agents may be used alone or in combination. The proportion (amount to be used or compounded) of the chain transfer agent is preferably 0.001 to 0.5 parts by weight of 100 parts by weight of the total amount of the raw material constitutive monomers for preparing the acrylic emulsion polymer (A) (total of the raw material monomers).

These chain transfer agents may be used alone or in combination.

Any method such as typical batch polymerization, continuous dropping polymerization, or portionwise dropping polymerization may be used for emulsion polymerization of the acrylic emulsion polymer (A) without limitation. From the viewpoint of low contamination, batch polymerization at a low temperature (for example, 55°C or less, preferably 30°C or less) is desirable. Polymerization performed under such conditions will reduce contamination probably because a large amount of high molecular weight polymers is readily produced while low molecular weight polymers are reduced.

The acrylic emulsion polymer (A) has a structural unit derived from the alkyl (meth)acrylate ester and a structural unit derived from the carboxyl group-containing unsaturated monomer as essential structural units. The content of the structural unit derived from the alkyl (meth) acrylate ester in the acrylic emulsion polymer (A) is preferably 70 to 99.5 wt%, more preferably 85 to 99 wt%, and most preferably 91 to 98 wt%. The content of the structural unit derived from the carboxyl group-containing unsaturated monomer in the acrylic emulsion polymer (A) is preferably 0.5 to 10 wt%, more preferably 1 to 5 wt%, and most preferably 2 to 4 wt%.

The solvent-insoluble content (also referred to as the proportion of the solvent insoluble component or "gel fraction") of the acrylic emulsion polymer (A) is preferably 70% (wt%) or more, more preferably 75 wt% or more, and most preferably 80 wt% or more. At a solvent-insoluble content less than 70 wt%, the acrylic emulsion polymer (A) contains a large amount of low molecular weight polymers, and the low molecular weight components in the pressure-sensitive adhesive layer cannot be reduced sufficiently by the crosslinking effect, which may cause contamination of the adherent derived from the low molecular weight components or may excessively increase the adhesive strength. The solvent-insoluble content can be controlled according to the reaction temperature of the polymerization initiator and types of the reactive surfactants (emulsifiers) and raw material constitutive monomers. The upper limit value of the solvent-insoluble content is, but should not be limited to, 99 wt%, for example.

In the present invention, the solvent-insoluble content of the acrylic emulsion polymer (A) is calculated as described in "Method for measuring solvent-insoluble content."

(Method for measuring solvent-insoluble content)

Approximately 0.1 g of the acrylic emulsion polymer (A) is weighed, and is wrapped in a porous tetrafluoroethylene sheet having an average pore size of 0.2 μm (trade name "NTF1122," available from NITTO DENKO CORPORATION). The wrapped sample is bound with a kite string, and the weight is measured. The weight is defined as a weight before immersion. The weight before immersion corresponds to the total weight of the acrylic emulsion polymer (A) (weighed above), the tetrafluoroethylene sheet, and the kite string. The total weight of the tetrafluoroethylene sheet and the kite string is also measured to be defined as the weight of the wrap.

The wrapped sample bound with the kite string (referred to as a "sample") is placed in a 50 ml container filled with ethyl acetate, and is allowed to stand at 23°C for 7 days. The sample treated with ethyl acetate is then moved from the container in an aluminum cup. The sample is dried at 130°C for two hours in a drying vessel to remove ethyl acetate. The weight of the sample is measured to be defined as the weight after immersion.

The solvent-insoluble content is calculated from the following expression:

$$\text{Solvent-insoluble content (wt\%)} = (a-b)/(c-b) \times 100 \quad (1)$$

where "a" represents the weight after immersion, "b" represents the weight of the wrapped sample, and "c" represents the weight before immersion.

[Water-insoluble crosslinking agent (B)]

Preferably, the adhesive composition according to the present invention contains the water-insoluble crosslinking agent (B). The water-insoluble crosslinking agent (B) is a water-insoluble compound having two or more (for example, 2 to 6) functional groups reactive with the carboxyl group in one molecule. The number of functional groups reactive with the carboxyl group in one molecule is preferably 3 to 5. As the number of functional groups reactive with the carboxyl group in one molecule increases, the adhesive composition is more densely crosslinked (that is, the polymer used for preparing the pressure-sensitive adhesive layer has a denser crosslinking structure). Such a crosslinking structure can prevent the pressure-sensitive adhesive layer from wetting/spreading after deposition of the pressure-sensitive adhesive layer. The crosslinking structure can constrain the movement of the polymer used for preparing the pressure-sensitive adhesive layer, preventing an excessive increase in the adhesive strength between the pressure-sensitive adhesive layer and the adherent over time due to segregation of the functional group (carboxyl group) in the pressure-sensitive adhesive layer on the surface of the adherent. If an excess number (for example, more than six) of functional groups reactive with the carboxyl group in one molecule is present, a gelated product may be produced.

Non-limiting examples of the functional group reactive with the carboxyl group in the water-insoluble crosslinking agent (B) include an epoxy group, an isocyanate group, and a carbodiimide group. Among these, the epoxy group is preferred from the viewpoint of reactivity. More preferred is a glycidyl amino group, which has high reactivity and reduces the unreacted residue in the crosslinking reaction to attain low contamination, and can prevent the adhesive strength to the adherent from being increased by the carboxyl group of the unreacted product in the pressure-sensitive adhesive layer over time. Consequently, the water-insoluble crosslinking agent (B) is preferably epoxy crosslinking agents having an epoxy group. Among these, a crosslinking agent having a glycidyl amino group (glycidyl amino crosslinking agent) is more preferred. If the water-insoluble crosslinking agent (B) is an epoxy crosslinking agent (especially a glycidyl amino crosslinking agent), the number of epoxy groups (especially glycidyl amino groups) in one molecule is two or more (for example, 2 to 6), and preferably three to five.

The water-insoluble crosslinking agent (B) is a water-insoluble compound. The term "water-insoluble" means that the solubility in 100 parts by weight of water at 25°C (weight of a compound (crosslinking agent) to be dissolved in 100 parts by weight of water) is 5 parts by weight or less, preferably 3 parts by weight or less, and most preferably 2 parts by weight or less. The uncrosslinked water-insoluble crosslinking agent, even if present, barely causes white contamination produced on the adherent under a highly humid environment, attaining lower contamination. In crosslinking with a water-soluble crosslinking agent alone, the unreacted crosslinking agent is dissolved in the moisture content and readily transferred to the adherent under a highly humid environment, causing white contamination. The water-insoluble crosslinking agent more significantly contributes to the crosslinking reaction (reaction with the carboxyl group) and more effective to prevent an increase in the adhesive strength over time than the water-soluble crosslinking agent. Because the water-insoluble crosslinking agent has high reactivity in the crosslinking reaction, the crosslinking reaction is accelerated by aging. The water-insoluble crosslinking agent can also prevent an increase in the adhesive strength to the adherent due to unreacted carboxyl groups in the pressure-sensitive adhesive layer.

The solubility of the crosslinking agent in water can be measured as follows.

(Method for measuring solubility in water)

The crosslinking agent is mixed with water having the same weight as that of the crosslinking agent (25°C) with a stirrer for 10 minutes at 300 rpm, and the mixture is separated into an aqueous phase and an oil phase by centrifugation. The aqueous phase is extracted, and is dried at 120 °C for one hour. From the weight loss by drying, the non-volatile content in the aqueous phase (parts by weight of the non-volatile component in 100 parts by weight of water) is determined.

Specific examples of the water-insoluble crosslinking agent (B) include glycidyl amino crosslinking agents, such as 1,3-bis(N,N-diglycidylaminomethyl)cyclohexane (such as "TETRAD-C," trade name, available form MITSUBISHI GAS CHEMICAL COMPANY, INC.) [solubility in 100 parts by weight of water at 25°C: 2 parts by weight or less], 1,3-bis(N,N-diglycidylaminomethyl)benzene (such as "TETRAD-X," trade name, available from MITSUBISHI GAS CHEMICAL COMPANY, INC.) [solubility in 100 parts by weight of water at 25°C: 2 parts by weight or less] ; and epoxy crosslinking agents, such as tris(2,3-epoxypropyl)isocyanurate (such as "TEPIC-G," trade name, available from Nissan Chemical Industries, Ltd.)

[solubility in 100 parts by weight of water at 25°C: 2 parts by weight or less].

If the water-insoluble crosslinking agent (B) is compounded during preparation of the adhesive composition according to the present invention, a liquid water-insoluble crosslinking agent (B) may be added (compounded) as it is, or the water-insoluble crosslinking agent (B) may be dissolved in and/or diluted with an organic solvent and added (preferably the amount of the organic solvent to be used is as small as possible). A method for emulsifying the water-insoluble crosslinking agent (B) with an emulsifier and adding the emulsion is not preferred because the emulsifier readily bleeds and causes contamination (white contamination in particular).

Preferably, the water-insoluble crosslinking agent (B) is compounded (contained in the adhesive composition according to the present invention) such that the molar amount of the functional group reactive with the carboxyl group of the water-insoluble crosslinking agent (B) is 0.3 to 1.3 mol relative to 1 mol of the carboxyl groups of the carboxyl group-containing unsaturated monomer used as the raw material constitutive monomer for the acrylic emulsion polymer (A). In other words, the proportion of the "total molar amount of all the functional groups reactive with the carboxyl groups in the water-insoluble crosslinking agent (B)" to the "total molar amount of all the carboxyl groups of the carboxyl group-containing unsaturated monomer used as the raw material constitutive monomer for the acrylic emulsion polymer (A)" [(functional groups reactive with the carboxyl groups)/(carboxyl groups)] (molar ratio) is preferably 0.3 to 1.3, more preferably 0.4 to 1.1, and most preferably 0.5 to 1.0. At a molar ratio [(functional groups reactive with the carboxyl groups)/(carboxyl groups)] of less than 0.3, many unreacted carboxyl groups are present in the pressure-sensitive adhesive layer, and the interaction between the carboxyl groups and the adherent may increase the adhesive strength over time. At a ratio of more than 1.3, a large amount of the unreacted water-insoluble crosslinking agent (B) is present in the pressure-sensitive adhesive layer, and the pressure-sensitive adhesive layer may have a poor appearance.

If the water-insoluble crosslinking agent (B) is an epoxy crosslinking agent, the molar ratio [epoxy groups/carboxyl groups] is preferably 0.3 to 1.3, more preferably 0.4 to 1.1, and most preferably 0.5 to 1.0. If the water-insoluble crosslinking agent (B) is a glycidyl amino crosslinking agent, the molar ratio [glycidyl amino groups/carboxyl groups] preferably falls within this range.

For example, 4 g of a water-insoluble crosslinking agent (B) containing the functional groups reactive with the carboxyl groups having a functional group equivalent weight of 110 (g/eq) is added (compounded) to the adhesive composition. The molar amount of the functional groups reactive with the carboxyl groups contained in the water-insoluble crosslinking agent (B) can be calculated:

Molar amount of functional groups reactive with carboxyl groups contained in water-insoluble crosslinking agent (B) = [amount of water-insoluble crosslinking agent (B) to be compounded (amount to be added)]/[functional group equivalent weight] = 4/110

For example, 4 g of an epoxy crosslinking agent having an epoxy equivalent weight of 110 (g/eq) is added (compounded) as the water-insoluble crosslinking agent (B), the molar amount of the epoxy group contained in the epoxy crosslinking agent can be calculated:

Molar amount of epoxy group contained in epoxy crosslinking agent = [amount of epoxy crosslinking agent to be compounded (amount to be added)]/[epoxy equivalent] = 4/110

[Acetylene diol compound (C)]

Preferably, the adhesive composition according to the present invention contains the acetylene diol compound (C). The acetylene diol compound (C) has an acetylene bond in the molecule. The acetylene diol compound (C) is, but should not be limited to, preferably compounds represented by Formulae (IV) or (V).

The acetylene diol compound (C) is preferably the following compounds represented by Formula (IV):

[Formula 2]

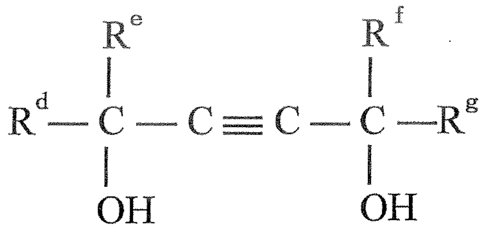

(IV)

where $R^d$, $R^e$, $R^f$, and $R^g$ each represent a hydrocarbon group having 1 to 20 carbon atoms, and may contain a heteroatom; $R^d$, $R^e$, $R^f$, and $R^g$ may be the same or different.

In Formula (IV), $R^d$, $R^e$, $R^f$, and $R^g$ may have a linear or branched structure. Among these, $R^d$ and $R^g$ are preferably alkyl groups having 2 to 10 carbon atoms, and more preferably n-butyl, sec-butyl, tert-butyl, and isobutyl groups, which have 4 carbon atoms. $R^e$ and $R^f$ are preferably alkyl groups having 1 to 4 carbon atoms, and more preferably a methyl group and an ethyl group, which have 1 or 2 carbon atoms, respectively.

Specific examples of the acetylene diol compound (C) represented by Formula (IV) include 7,10-dimethyl-8-hexadecyn-7,10-diol, 4,7-dimethyl-5-decyn-4,7-diol, 2,4,7,9-tetramethyl-5-decyn-4,7-diol, and 3,6-dimethyl-4-octyn-3,6-diol.

In order to compound the acetylene diol compound (C) represented by Formula (IV) during preparation of the adhesive composition according to the present invention, the acetylene diol compound (C) may be dispersed or dissolved in any solvent for use for the purpose of enhancing workability during the compounding operation. Examples of the solvent include 2-ethylhexanol, butyl cellosolve, dipropylene glycol, ethylene glycol, propylene glycol, n-propyl alcohol, and isopropyl alcohol. Among these, ethylene glycol and p-ropylene glycol are preferred from the viewpoint of dispersibility in an emulsion system. The content of the solvent in 100 wt% of dispersion or solution of the acetylene diol compound (C) in a solvent during the compounding operation is preferably less than 40 wt% (for example, 15 to 35 wt%) if the solvent is ethylene glycol, and is preferably less than 70 wt% (for example, 20 to 60 wt%) if the solvent is propylene glycol.

The acetylene diol compound (C) represented by Formula (IV) may be commercially available products, and examples thereof include Surfynol 104 series available from Air Products and Chemicals, Inc. More specific examples thereof include Surfynols 104E, 104H, 104A, 104BC, 104DPM, 104PA, and 104PG-50.

The acetylene diol compound (C) is preferably the following compounds represented by Formula (V):

[Formula 3]

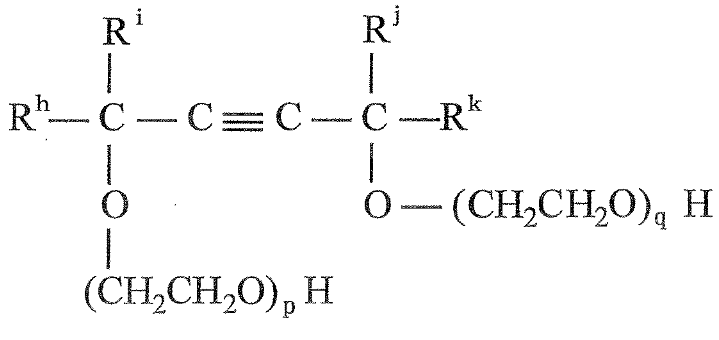

(V)

where $R^h$, $R^1$, $R^j$, and $R^k$ represent hydrocarbon groups having 1 to 20 carbon atoms, and may contain a heteroatom; $R^h$, $R^1$, $R^j$, and $R^k$ may be the same or different; p and q are integers of 0 or more; the sum of p and q [p+q] is 1 or more, preferably 1 to 20, and more preferably 1 to 9; p and q may be the same or different. Preferably, p and q are the numbers to be adjusted such that the acetylene diol compound (C) has an HLB value of less than 13. At p = 0, $[-O-(CH_2CH_2O)_pH]$ is a hydroxyl group [-OH]. At q = 0, the same is true.

In Formula (V), $R^h$, $R^i$, $R^j$, and $R^k$ may have a linear or branched structure. Among these, $R^h$ and $R^k$ are preferably alkyl groups having 2 to 10 carbon atoms, and more preferably n-butyl, sec-butyl, tert-butyl, and isobutyl groups, which have 4 carbon atoms. $R^1$ and $R^j$ are preferably alkyl groups having 1 to 4 carbon atoms, and more preferably a methyl group and an ethyl group, which have 1 and 2 carbon atoms, respectively.

Specific examples of the acetylene diol compound (C) represented by Formula (V) include ethylene oxide adducts of 7,10-dimethyl-8-hexadecyn-7,10-diol, ethylene oxide adducts of 4,7-dimethyl-5-decyn-4,7-diol, ethylene oxide adducts of 2,4,7,9-tetramethyl-5-decyn-4,7-diol, and ethylene oxide adducts of 3,6-dimethyl-4-octyn-3,6-diol. In the ethylene oxide adducts of 2,4,7,9-tetramethyl-5-decyn-4,7-diol, the average molar number of ethylene oxide to be added is preferably 9 or less.

Preferably, p and q in Formula (V) are adjusted such that the acetylene diol compound (C) has an HLB value of less than 13. For example, if the acetylene diol compound (C) represented by Formula (V) is an ethylene oxide adduct of 2,4,7,9-tetramethyl-5-decyn-4,7-diol, the sum of p and q is preferably 9 or less.

If the acetylenediol compound (C) represented by Formula (V) (ethylene oxide-added acetylene diol compound) is compounded during preparation of the adhesive composition according to the present invention, it is preferred that the compound (C) be compounded without any solvent. Alternatively, the acetylene diol compound (C) may be dispersed or dissolved in any solvent for use for the purpose of enhancing workability during the compounding operation. Examples of the solvent include 2-ethylhexanol, butyl cellosolve, dipropylene glycol, ethylene glycol, propylene glycol, n-propyl alcohol, and isopropyl alcohol. Among these, ethylene glycol and propylene glycol are preferred from the viewpoint of dispersibility in an emulsion system.

The acetylene diol compound (C) represented by Formula (V) may be commercially available products, and examples thereof include Surfynol 400 series available from Air Products and Chemicals, Inc. More specifically, examples thereof include Surfynols 420 and 440.

These acetylene diol compounds (C) may be used alone or in combination.

The HLB value of the acetylene diol compound (C) (simply referred to as "HLB") is, but should not be limited to, preferably less than 13, more preferably 1 to 10, still more preferably 3 to 8, and most preferably 3 to 5. At an HLB value of 13 or more, contamination of the adherent may be increased. The HLB value is the hydrophile-lipophile balance defined by Griffin, which represents the degree of affinity of a surfactant with water or oil. The definition of the HLB value is found in W.C. Griffin: J. Soc. Cosmetic Chemists, 1,311 (1949), or "Kaimen-Kasseizai Handobukku (Surfactant Handbook)," Third edition, Koshitami Takahashi, Yoshiro Nanba, Motoo Koike, and Masao Kobayashi, published by Kogyo Tosho K. K. , Nov. 25, 1972, pp. 179 to 182, for example.

The amount of the acetylene diol compound (C) to be compounded (content in the adhesive composition according to the present invention) is preferably 0.01 to 10 parts by weight, more preferably 0.1 to 7 parts by weight, still more preferably 0.2 to 5 parts by weight, and most preferably 0.5 to 3 parts by weight of 100 parts by weight of the acrylic emulsion polymer (A). At an amount less than 0.01 parts by weight, the water-insoluble crosslinking agent may cause a poor appearance attributed to depressions. At an amount more than 10 parts by weight, the acetylene diol compound (C) may contaminate the adherent.

The acetylene diol compound (C) compounded in the adhesive composition can reduce depressions derived from the water-insoluble crosslinking agent probably because the acetylene diol compound (C) improves the dispersibility of the water-insoluble crosslinking agent in the adhesive composition, and is effective for levelling during preparation of the pressure-sensitive adhesive layer.

[Surfactant (D) having number average molecular weight of 1200 to 4000]

Preferably, the adhesive composition according to the present invention contains a surfactant (D) having a number average molecular weight of 1200 to 4000 (referred to as a "surfactant (D)"). The surfactant (D) compounded in the adhesive composition allows the adhesive composition to have high resistance against an increase in the adhesive strength, high adhesion to an irregular surface, and high followability to the irregular surface.

The resistance against an increase in the adhesive strength can be determined in accordance with the following criteria. According to the evaluation of "(2) Adhesive strength" in [Evaluation] described later, the resistance against an increase in the adhesive strength can be determined to be "high" if the difference between the initial adhesive strength and the adhesive strength after preservation of the bonded adhesive sheet at 40°C for one week [(adhesive strength after preservation of bonded adhesive sheet at 40°C for one week)-(initial adhesive strength)] is 0.20 N/25 mm or less.

Preferably, the surfactant (D) contained in the adhesive composition according to the present invention is a compound (at least one compound) selected from the group consisting of compounds represented by Formulae (I), (II), and (III). The surfactant (D) selected from the group consisting of compounds -represented by Formulae (I), (II), and (III) can be prepared by a reaction of propylene oxide or a combination of ethylene oxide and propylene oxide with a fatty acid or a higher alcohol, for example. Alternatively, the surfactant (D) can be prepared by a reaction of ethylene glycol with propylene glycol.

Throughout the specification, PO represents an oxypropylene group [$-CH_2CH(CH_3)O-$], and EO represents an oxyethylene group [$-CH_2CH_2O-$].

Examples of the surfactant (D) include compounds represented by Formula (I):

$$R^aO-(PO)_{n1}(EO)_{m1}-CO-R^b \qquad (I)$$

where $R^a$ represents an alkyl or alkenyl group having 8 to 22 carbon atoms or an alkylcarbonyl or alkenylcarbonyl group having 8 to 21 carbon atoms; $R^b$ represents an alkyl or alkenyl group having 8 to 21 carbon atoms.

In Formula (I), PO represents an oxypropylene group, and EO represents an oxyethylene group. n1 is an integer of 1 or more. If a content of propylene oxide in the surfactant (D) is adjusted so as to have 70 to 100 wt%, n1 is preferably 2 to 50, for example. m1 represents an integer of 0 to 15 (preferably an integer of 2 to 10). At m1 = 0, Formula (I) is expressed by $R^aO-(PO)_{n1}-CO-R^b$.

In Formula (I), the form of addition of EO and PO (form of copolymerization) is random addition or block addition. In the block addition, the arrangement of blocks is (EO block) - (PO block) - (EO block), (PO block) - (EO block)-(PO block), (EO block)-(PO block), or (PO block)-(EO block), for example.

Examples of the surfactant (D) include compounds represented by Formula (II):

$$R^cO-(PO)_{n2}(EO)_{m2}-H \qquad (II)$$

where $R^c$ represents a nonylphenyl group, an octylphenyl group, or an alkyl or alkenyl group having 8 to 22 carbon atoms.

In Formula (II), PO represents an oxypropylene group, and EO represents an oxyethylene group. n2 is an integer of 1 or more. If a content of propylene oxide in the surfactant (D) is adjusted so as to have 70 to 100 wt%, n2 is preferably 10 to 40, for example. m2 represents an integer of 0 to 20 (preferably an integer of 2 to 10). At m2 = 0, Formula (II) is expressed by $R^cO-(PO)_{n2}-H$.

In Formula (II), the form of addition of EO and PO (form of copolymerization) is random addition or block addition. In the block addition, the arrangement of blocks is (EO block) - (PO block) or (PO block)-(EO block), for example.

Examples of the surfactant (D) include compounds represented by Formula (III):

$$HO-(PO)_{n3}(EO)_{m3}-H \qquad (III)$$

where PO represents an oxypropylene group, and EO represents an oxyethylene group. n3 is an integer of 1 or more. If a content of propylene oxide in the surfactant (D) is adjusted so as to have 70 to 100 wt%, n3 is preferably 10 to 69, for example. m3 is an integer of 0 to 40 (preferably an integer of 2 to 27). At m3 = 0, Formula (III) is polypropylene glycol expressed by $HO-(PO)_{n3}-H$.

In Formula (III), the form of addition of EO and PO (form of copolymerization) is random addition or block addition. In the block addition, the arrangement of blocks is (EO block) - (PO block) - (EO block), (PO block)-(EO block)-(PO block), (EO block)-(PO block), or (PO block)-(EO block), for example.

These surfactants (D) may be used alone or in combination.

Among these, the compounds represented by Formula (III) are particularly preferred because removability and contamination are well-balanced. Among these, preferred are block addition compounds (copolymers) of EO and PO having an arrangement of (PO block)-(EO block)-(PO block). The surfactant (D) is preferably a triblock copolymer including a PO block on each side of an EO block.

Examples of commercially available products of the surfactant (D) include PLONONs #101P, #183, #201, #202B, and #352 and UNILUBEs 10MS-250KB and 20MT-2000B (trade names, available from NOF CORPORATION) ; and Adeka Pluronics L-33, L-42, L-43, L-61, L-62, L-71, L-72, L-81, L-92, L-101, 17R-2, 17R-3, 25R-1, and 25R-2 (trade names, available from Adeka Corporation).

The content of propylene oxide in the surfactant (D) (referred to as a "PO content") is, but should not be limited to, preferably 70 to 100 wt%, more preferably 70 to 95 wt%, still more preferably 80 to 95 wt%, further still more preferably 85 to 95 wt%, and most preferably 90 to 95 wt% of 100 wt% of the surfactant (D). At a PO content of less than 70 wt%, the adherent may be contaminated significantly. From the viewpoint of low contamination, the PO content is preferably 95 wt% or less. The PO content is the "ratio (wt%) of the total weight of all the oxypropylene groups in the surfactant (D) to the total weight of all the surfactants (D) contained in the adhesive composition according to the present invention. " An exemplary method for measuring the PO content is NMR.

The surfactant (D) has a number average molecular weight (Mn) of preferably 1200 to 4000, and more preferably 1500 to 3500. An Mn of more than 4000 may cause contamination of the adherent. An Mn of less than 1200 may also cause contamination of the adherent. The number average molecular weight (Mn) indicates the number average molecular weight of all the surfactants (D) contained in the adhesive composition according to the present invention. The number average molecular weight (Mn) is measured by gel permeation chromatography (GPC). An exemplary method

for measuring the Mn will be described below.

[Measurement]

The molecular weight is measured with a GPC apparatus "HLC-8220GPC" available from Tosoh Corporation, and is determined to be a value in terms of polystyrene. The conditions are as follows:

Concentration of a sample: 0.2 wt% (THF solution)
Sample injected: 10 μl
Eluent: THF
Flow rate: 0.6 ml/min
Operation temperature: 40°C
Columns:
Sample columns; one TSKguard column SuperHZ-H and two TSKgel SuperHZM-H's
Reference column; one TSKgel SuperH-RC Detector: differential refractive index detector

The amount of the surfactant (D) to be compounded (content thereof in the adhesive composition according to the present invention) is preferably 0.01 to 2.5 parts by weight, more preferably 0.01 to 1.5 parts by weight, still more preferably 0.02 to 1.0 part by weight, further still more preferably 0.05 to 0.7 parts by weight, and most preferably 0.1 to 0.5 parts by weight of 100 parts by weight of the acrylic emulsion polymer (A). Less than 0.01 parts by weight of the surfactant (D) to be compounded may not attain sufficient easy removability, and more than 2.5 parts by weight thereof may readily cause contamination of the adherent.

[Removable water-dispersible acrylic pressure-sensitive adhesive composition and pressure-sensitive adhesive sheet]

The removable water-dispersible acrylic pressure-sensitive adhesive composition according to the present invention contains the acrylic emulsion polymer (A) as the essential component as described above. Preferably, the adhesive composition according to the present invention comprises the water-insoluble crosslinking agent (B), the acetylene diol compound (C), and the surfactant (D) having a number average molecular weight of 1200 to 4000. The adhesive composition according to the present invention may further contain a crosslinking agent other than the water-insoluble crosslinking agent (B) (referred to as "additional crosslinking agent") and other optional additives.

The adhesive composition according to the present invention is a water-dispersible adhesive composition. The term "water-dispersible" means that a substance can be dispersed in an aqueous medium. The adhesive composition according to the present invention can be dispersed in an aqueous medium. The aqueous medium is a dispersive medium composed of water as an essential component. The aqueous medium may be water alone or a mixture of water and a water-soluble organic solvent. The adhesive composition according to the present invention may be a dispersion using the aqueous medium.

The adhesive composition according to the present invention may contain a crosslinking agent (additional crosslinking agent) other than the water-insoluble crosslinking agent (B). The additional crosslinking agent may be, but not should be limited to, polyfunctional hydrazide crosslinking agents and oxazoline group-containing crosslinking agents. The polyfunctional hydrazide crosslinking agents can enhance the removability of the pressure-sensitive adhesive layer prepared from the adhesive composition, the adhesiveness thereof, and the anchoring characteristics between the pressure-sensitive adhesive layer and the substrate. The polyfunctional hydrazide crosslinking agent (simply referred to as "hydrazide crosslinking agent") has at least two hydrazide groups in one molecule. The number of hydrazide groups in one molecule is preferably 2 or 3, and more preferably 2. Preferred examples of such hydrazide crosslinking agents include, but should not be limited to, dihydrazide compounds such as dihydrazide oxalate, dihydrazide malonate, dihydrazide succinate, dihydrazide glutarate, dihydrazide adipate, dihydrazide pimelate, dihydrazide suberate, dihydrazide azelate, dihydrazide sebacate, dihydrazide dodecanedioate, dihydrazide phthalate, dihydrazide isophthalate, dihydrazide terephthalate, dihydrazide 2,6-naphthalenedicarboxylate, dihydrazide naphthalate, dihydrazide acetonedicarboxylate, dihydrazide fumarate, dihydrazide maleate, dihydrazide itaconate, dihydrazide trimellitate, dihydrazide 1,3,5-benzenetricarboxylate, dihydrazide pyromellitate, and dihydrazide aconitate. Among these, more preferred are dihydrazide adipate and dihydrazide sebacate. These hydrazide crosslinking agents and oxazoline group-containing compounds may be used alone or in combination.

The hydrazide crosslinking agent may be commercially available products, such as "dihydrazide adipate (reagent)" available from Tokyo Chemical Industry Co., Ltd. and "adipoyl dihydrazide (reagent)" available from Wako Pure Chemical Industries, Ltd.

The oxazoline group-containing compound may be commercially available products, such as "EPOCROS WS-500" available from NIPPON SHOKUBAI CO., LTD.

The amount of the hydrazide crosslinking agent to be compounded (content thereof in the adhesive composition according to the present invention) is preferably 0.025 to 2.5 mol, more preferably 0.1 to 2 mol, and most preferably 0.2 to 1.5 mol of 1 mol of keto groups of a keto group-containing unsaturated monomer used as the raw material constitutive monomer for the acrylic emulsion polymer (A) . An amount of less than 0.025 mol may reduce the effect attained by addition of the crosslinking agent, resulting in difficulties in removal of the pressure-sensitive adhesive layer or the pressure-sensitive adhesive sheet and white contamination of the adherent due to the low molecular weight components which remain in the polymer used for preparing the pressure-sensitive adhesive layer. An amount of more than 2.5 mol may cause contamination due to the unreacted crosslinking agent component.

From the viewpoint of low contamination, preferably quaternary ammonium salts, and more preferably quaternary ammonium compounds are not added to the adhesive composition according to the present invention. Consequently, it is preferred that the adhesive composition according to the present invention contain substantially no quaternary ammonium salts, and it is more preferred that the adhesive composition according to the present invention contain substantially no quaternary ammonium compounds. These compounds are typically used as catalysts for enhancing the reactivity of the epoxy crosslinking agents. These compounds can freely migrate in the pressure-sensitive adhesive layer without being trapped into the polymer used for preparing the pressure-sensitive adhesive layer, and are readily bled out on the surface of the adherent. These compounds, if contained in the adhesive composition, may readily cause white contamination to obstruct low contamination. Specifically, the content of the quaternary ammonium salts in the adhesive composition according to the present invention is preferably less than 0.1 wt%, more preferably less than 0.01 wt%, and most preferably less than 0.005 wt% of 100 wt% of the adhesive composition (non-volatile content). More preferably, the content of the quaternary ammonium compounds falls within this range.

Specifically, the quaternary ammonium salts are, but should not be limited to, compounds represented by the following formula:

[Formula 4]

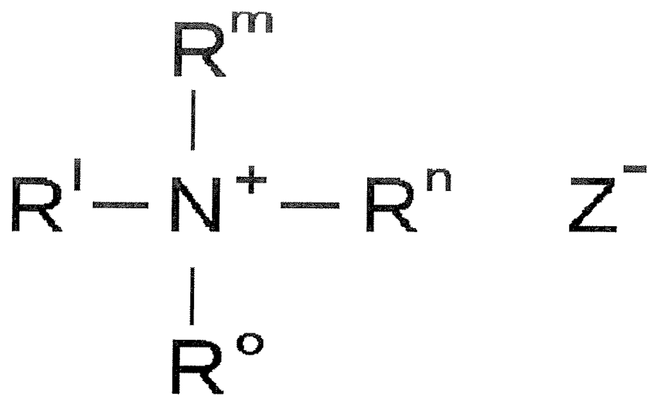

where $R^1$, $R^m$, $R^n$, and $R^o$ exclude a hydrogen atom, and each represent an alkyl or aryl group or a group derived therefrom (such as alkyl or aryl groups having a substituent); $Z^-$ represents a counter ion.

Examples of the quaternary ammonium salts and the quaternary ammonium compounds include, but should not be limited to, alkylammonium hydroxides, such as tetramethylammonium hydroxide (TMAH), tetraethylammonium hydroxide, tetrapropylammonium hydroxide, and tetrabutylammonium hydroxide, and salts thereof; arylammonium hydroxides, such as tetraphenylammonium hydroxide, and salts thereof; and bases including cations such as a trilaurylmethylammonium ion, a didecyldimethylammonium ion, a dicocoyldimethylammonium ion, a distearyldimethylammonium ion, a dioleyldimethylammonium ion, a cetyltrimethylammonium ion, a stearyltrimethylammonium ion, a behenyltrimethylammonium ion, a cocoylbis(2-hydroxyethyl)methylammonium ion, a polyoxyethylene(15)cocostearylmethylammonium ion, an oleylbis(2-hydroxyethyl)methylammonium ion, a cocobenzyldimethylammonium ion, a laurylbis(2-hydroxyethyl)methylammonium ion, and a decylbis(2-hydroxyethyl)methylammonium ion, and salts thereof.

From the viewpoint of low contamination, preferably, tertiary amines and imidazole compounds typically used as catalysts for enhancing the reactivity of the epoxy crosslinking agents are not added to the adhesive composition according to the present invention as the quaternary ammonium salts (or quaternary ammonium compounds). Consequently, it is preferred that the adhesive composition according to the present invention contain neither substantially tertiary amines nor imidazole compounds. Specifically, the content of the tertiary amines and the imidazole compounds in the adhesive composition according to the present invention (total content of the tertiary amines and the imidazole compounds) is preferably less than 0.1 wt%, more preferably less than 0.01 wt%, and most preferably less than 0.005

wt% of 100 wt% of the adhesive composition (non-volatile content).

Examples of the tertiary amines include tertiary amine compounds, such as triethylamine, benzyldimethylamine, and α-methylbenzyl-dimethylamine. Examples of the imidazole compounds include 2-methylimidazole, 2-heptadecylimidazole, 2-phenylimidazole, 4-ethylimidazole, 4-dodecylimidazole, 2-phenyl-4-hydroxymethylimidazole, 2-ethyl-4-hydroxymethylimidazole, 1-cyanoethyl-4-methylimidazole, and 2-phenyl-4,5-dihydroxymethylimidazole.

Preferably, the adhesive composition according to the present invention contains substantially no hydrophobic silica. Specifically, the content of the hydrophobic silica in the adhesive composition according to the present invention is preferably less than $5\times10^{-4}$ wt%, more preferably less than $1\times10^{-4}$ wt%, more preferably less than $1\times10^{-5}$ wt%, and most preferably 0 wt% of 100 wt% of the adhesive composition (non-volatile content). The hydrophobic silica contained in the adhesive composition may form agglomerated products to cause defects derived from silica particles (poor appearance). The silica particles may clog a filter during filtration of the adhesive composition to reduce production efficiency.

The adhesive composition according to the present invention may contain a variety of additives other than these in the range in which contamination is not affected. Examples of such additives include pigments, fillers, dispersants, plasticizers, stabilizers, antioxidants, ultraviolet absorbing agents, ultraviolet light stabilizers, antioxidants, and preservative agents.

The adhesive composition according to the present invention can be prepared by mixing the acrylic emulsion polymer (A). Preferably, the adhesive composition according to the present invention is prepared by further mixing the water-insoluble crosslinking agent (B), the acetylene diol compound (C), and the surfactant (D) having a number average molecular weight of 1200 to 4000. The additional crosslinking agent and the variety of additives may be mixed when necessary. These can be mixed by a known standard method of preparing an emulsion. The method is, but should not be limited to, preferably stirring with a stirrer. Any stirring conditions may be employed. For example, the stirring temperature is preferably 10 to 50°C, and more preferably 20 to 35°C. The stirring time is preferably 5 to 30 minutes, and more preferably 10 to 20 minutes. The number of rotations of the stirrer is preferably 10 to 2500 rpm, and more preferably 30 to 2000 rpm.

The resulting adhesive composition is applied to at least one surface of the substrate (also referred to as "support" or "support substrate"), and is optionally dried to form a pressure-sensitive adhesive layer. The pressure-sensitive adhesive sheet according to the present invention (pressure-sensitive adhesive sheet disposed on at least one surface of the substrate and including the pressure-sensitive adhesive layer prepared from the adhesive compositi on according to the present invention) can be produced. Crosslinking is performed by dehydration in a drying step and heating of the pressure-sensitive adhesive sheet after drying. In the present invention, the pressure-sensitive adhesive layer is preferably disposed by directly applying the adhesive composition to the surface of the substrate (so-called direct application). For the pressure-sensitive adhesive layer according to the present invention containing a high solvent-insoluble content, the direct application is preferred to a transfer method of disposing the pressure-sensitive adhesive layer on a release film and then transferring the pressure-sensitive adhesive layer to the substrate due to insufficient anchoring characteristics (adhesion) onto the substrate.

In the pressure-sensitive adhesive sheet according to the present invention, the pressure-sensitive adhesive layer has a thickness of preferably 1 to 50 μm, more preferably 1 to 35 μm, and most preferably 3 to 25 μm.

In the pressure-sensitive adhesive sheet according to the present invention, the pressure-sensitive adhesive layer has a solvent-insoluble content (gel fraction) of preferably 90% (wt%) or more, and more preferably 95 wt% or more. Less than 90 wt% solvent-insoluble content may increase transfer of contaminants to the adherent to cause white contamination, or may lead to insufficient removability (difficulties in removal).

The solvent-insoluble content in the pressure-sensitive adhesive layer can be determined by the method for measuring the solvent-insoluble content in the acrylic emulsion polymer (A). Specifically, the solvent-insoluble content can be determined by replacing the "acrylic emulsion polymer (A) " with the "pressure-sensitive adhesive layer" in the "method for measuring the solvent-insoluble content in the acrylic emulsion polymer (A)."

In the pressure-sensitive adhesive sheet according to the present invention, the pressure-sensitive adhesive layer has an elongation at breakage of preferably 200% or less, more preferably 150% or less, still more preferably 130% or less, further still more preferably 40 to 120%, and most preferably 60 to 115% in a tensile test from the viewpoint of the degree of crosslinking of the pressure-sensitive adhesive layer. The elongation at breakage is an index indicating the degree of crosslinking of the pressure-sensitive adhesive layer. The pressure-sensitive adhesive layer having an elongation at breakage of 200% or less has a dense crosslinking structure of the polymer used for preparing the pressure-sensitive adhesive layer. Such a crosslinking structure can prevent the pressure-sensitive adhesive layer from wetting/spreading after disposition of the pressure-sensitive adhesive layer. The crosslinking structure constrains the movement of the polymer used for preparing the pressure-sensitive adhesive layer, preventing an increase in the adhesive strength to the adherent over time due to segregation of functional groups (carboxyl groups) in the pressure-sensitive adhesive layer on the surface of the adherent.

In the pressure-sensitive adhesive sheet according to the present invention, the acrylic polymer used for preparing the pressure-sensitive adhesive layer has a glass transition temperature of preferably -70 to -10°C, more preferably

-70 to -20°C, still more preferably -70 to -40°C, and most preferably -70 to -60°C. A glass transition temperature of more than -10°C may lead to an insufficient adhesive strength, causing delamination or peeling of the pressure-sensitive adhesive layer during the process. A glass transition temperature of less than -70°C may lead to difficulties in removal in a high removing rate (tensile rate) to reduce work efficiency. The glass transition temperature of the polymer used for preparing the pressure-sensitive adhesive layer can be adjusted by the monomer composition for preparing the acrylic emulsion polymer (A), for example.

In the pressure-sensitive adhesive sheet according to the present invention, the pressure-sensitive adhesive layer (pressure-sensitive adhesive layer prepared from the removable water-dispersible acrylic pressure-sensitive adhesive composition according to the present invention) has a shear storage modulus at 20°C (G') of, but should not be limited to, preferably $2.90\times10^5$ Pa or less (for example, $1.0\times10^4$ to $2.90\times10^5$ Pa), and more preferably $5.0\times10^4$ to $2.90x10^5$ Pa which is determined by a dynamic viscoelastic measurement. The shear storage modulus at 20°C is an index indicating the hardness of the pressure-sensitive adhesive layer at 20°C. The shear storage modulus at 20°C of $2.90\times10^5$ Pa or less provides a suitable softness of the pressure-sensitive adhesive layer at 20°C to attain high adhesion to the adherent having an irregular surface.

In the pressure-sensitive adhesive sheet according to the present invention, the pressure-sensitive adhesive layer (pressure-sensitive adhesive layer prepared from the removable water-dispersible acrylic pressure-sensitive adhesive composition according to the present invention) has a maximum loss tangent (tan$\delta$) between -60°C and -20°C of, but should not be limited to, preferably 1.08 or less (for example, 0.85 to 1.08), and more preferably 0.90 to 1.08 which is determined by a dynamic viscoelastic measurement. The loss tangent at 20 °C (tan$\delta$) is preferably 0. 08 or more (for example, 0.08 to 0.50), and more preferably 0.08 to 0.40. The loss tangent between -60°C and -20°C is an index indicating the adhesive force under high-speed removal. A loss tangent between -60°C and -20°C of 1.08 or less improves easy removability under high-speed removal, for example, at a removal rate of 30 m/min.

In the pressure-sensitive adhesive sheet according to the present invention, the shear storage modulus, the loss tangent, and the adhesive strength of the pressure-sensitive adhesive layer (pressure-sensitive adhesive layer prepared from the removable water-dispersible acrylic pressure-sensitive adhesive composition according to the present invention) which are determined by a dynamic viscoelastic measurement are synonymous with the shear storage modulus, the loss tangent, and the adhesive strength, respectively, of the removable water-dispersible acrylic pressure-sensitive adhesive composition in the form of a pressure-sensitive adhesive layer which are determined by a dynamic viscoelastic measurement, respectively.

In the pressure-sensitive adhesive sheet according to the present invention, the adhesive strength (i) of the pressure-sensitive adhesive layer (pressure-sensitive adhesive layer prepared from the removable water-dispersible acrylic pressure-sensitive adhesive composition according to the present invention) to triacetylcellulose is, but should not be limited to, preferably 1.5 N/25 mm or less (for example, 0.2 to 1.5 N/25 mm), and more preferably 0.5 to 1.5 N/25 mm.

The adhesive strength (i) can be evaluated by the following procedure, for example. The pressure-sensitive adhesive sheet (adhesive layer) is bonded to a triacetylcellulose polarizing plate not surface treated (trade name "SEG1425DU," available from NITTO DENKO CORPORATION), and is left to stand at 23°C for 30 minutes. The pressure-sensitive adhesive sheet is then peeled at an angle of 180° (23°C, 50%RH, peeling angle: 180°, tensile rate: 30 m/min) to measure the adhesive strength (i). More specifically, the adhesive strength (i) can be measured by the method which will be described in "(6) Easy removability (DU)" in [Evaluation]

In the pressure-sensitive adhesive sheet according to the present invention, the ratio (i)/(ii) of the adhesive strength (i) to the adhesive strength (ii) to a rough surface having a surface average roughness (arithmetic average roughness of the surface, Ra) of 200 to 450 nm of the pressure-sensitive adhesive layer (pressure-sensitive adhesive layer prepared from the removable water-dispersible acrylic pressure-sensitive adhesive composition according to the present invention) is, but should not be limited to, preferably 3 or less (for example, 1.5 to 3), and more preferably 2 to 3.

Any adherent having a surface average roughness of 200 to 450 nm can be used for the measurement of the adhesive strength (ii) without limitation. Examples thereof include polarizing plates having surfaces subjected to an anti-glare treatment with silica gel (such as AGS2B).

The adhesive strength (ii) can be evaluated by the following procedure, for example. The pressure-sensitive adhesive sheet (adhesive layer) is bonded to a polarizing plate after an anti-glare treatment (trade name "AGS2B," available from NITTO DENKO CORPORATION, surface average roughness: 242 nm), and is left to stand at 23°C for 30 minutes. The pressure-sensitive adhesive sheet is peeled at an angle of 180° (23°C, 50%RH, peeling angle: 180°, tensile rate: 30 m/min) to measure the adhesive strength (ii). More specifically, the adhesive strength (ii) can be measured by the method which will be described in " (7) Easy removability (AGS2B) " in [Evaluation]

At a ratio (i) / (ii) of 3 or less, the pressure-sensitive adhesive sheet according to the present invention has high removability independent of the material of the adherent or the surface profile thereof, and the adhesive strength barely increases over time.

The substrate used for the pressure-sensitive adhesive sheet according to the present invention is preferably a plastic substrate (such as a plastic film and a plastic sheet) in order to provide a highly transparent pressure-sensitive

adhesive sheet. Materials for the plastic substrate are, but should not be limited to, polyolefins (polyolefin resins), such as polypropylene and polyethylene; polyesters (polyester resins), such as polyethylene terephthalate (PET); and transparent resins, such as polycarbonates, polyamides, polyimides, acrylics, polystyrene, acetates, polyethersulfones, and triacetylcellulose. These resins may be used alone or in combination. Among these, polyester resins and polyolefin resins are preferred, and PET, polypropylene, and polyethylene are more preferred because of ease of production and molding, although any other resin may also be used. The substrate is preferably composed of a polyester or polyolefin film, such as a PET, polypropylene, or polyethylene film. Examples of the polypropylene include, but should not be limited to, homopolymers, and random copolymers and block copolymers with α-olefins. Examples of the polyethylene include low density polyethylene (LDPE), high density polyethylene (HDPE), and linear low density polyethylene (L-LDPE). These may be used alone or in combination. The thickness of the substrate is, but should not be limited to, preferably 10 to 150 μm, and more preferably 30 to 100 μm.

To improve the adhesion to the pressure-sensitive adhesive layer, the surface of the substrate for disposing the pressure-sensitive adhesive layer is preferably subjected to a bonding facilitating treatment, such as an acid treatment, an alkali treatment, a primer treatment, a corona treatment, a plasma treatment, or an ultraviolet light treatment. An intermediate layer may be disposed between the substrate and the pressure-sensitive adhesive layer. The intermediate layer has a thickness of preferably 0.01 to 1 μm, and more preferably 0.1 to 1 μm, for example.

In the pressure-sensitive adhesive sheet according to the present invention, the adhesive strength (180° peeling test) (peel strength when the pressure-sensitive adhesive sheet bonded to the polarizing plate is removed) to the polarizing plate (triacetylcellulose (TAC) plate) (arithmetic average roughness of the surface Ra: 50 nm or less) is preferably 0.01 to 5 N/25 mm, more preferably 0.02 to 3 N/25 mm, still more preferably 0. 03 to 2 N/25 mm, and most preferably 0.04 to 1 N/25 mm at a tensile rate of 0.3 m/min. An adhesive force of more than 5 N/25 mm may cause difficulties in removal of the pressure-sensitive adhesive sheet during the steps of producing polarizing plates or liquid crystal display devices, leading to low production efficiency and poor handling characteristics. An adhesive strength of less than 0.01 N/25 mm may cause delamination or peeling of the pressure-sensitive adhesive sheet during the production step, reducing the protective function as the pressure-sensitive adhesive sheet for surface protection. The arithmetic average roughness Ra can be measured with a contact stylus surface profiler P-15 available from KLA-Tencor Corporation, for example. Any conditions can be employed for the measurement of the surface roughness (arithmetic average roughness Ra). For example, the length for the measurement is 1000 μm, the scanning rate is 50 μm/sec, the number of scans is one, and the load is 2 mg.

The pressure-sensitive adhesive sheet according to the present invention has high resistance against white contamination of the adherent. The resistance against white contamination can be evaluated by the following procedure, for example. The pressure-sensitive adhesive sheet is bonded to a polarizing plate (trade name "ARCHTC," available from NITTO DENKO CORPORATION) at 0.15 MPa and 0.2 m/min, and is left to stand at 85°C for four hours. The pressure-sensitive adhesive sheet is then removed. The polarizing plate after removal of the pressure-sensitive adhesive sheet is further left to stand for 12 hours under an environment at 40°C and 92%RH, and the surface of the plate is observed. Preferably, no whiteness should be found on the surface of the polarizing plate. If whiteness occurs in the polarizing plate as the adherent under a humid condition (highly humid condition) after bonding and removal of a pressure-sensitive adhesive sheet, such a pressure-sensitive adhesive sheet does not have sufficiently low contamination as a surface protective film for optical components.

The pressure-sensitive adhesive sheet according to the present invention can be wound into a roll while the pressure-sensitive adhesive layer is being protected with a removal film (separator). A release treatment and/or dirt resistant treatment is performed on the rear surface of the pressure-sensitive adhesive sheet (surface remote from the pressure-sensitive adhesive layer) with a silicone mold releasing agent, a fluorine mold releasing agent, a long-chain alkyl mold releasing agent, a fatty acid amide mold releasing agent, or silica powder to prepare a rear surface treating layer (such as a releasing layer and a dirt resistant layer) . Among these, the disposition of pressure-sensitive adhesive layer/substrate/rear surface treating layer is preferred as the pressure-sensitive adhesive sheet according to the present invention.

More preferably, the pressure-sensitive adhesive sheet according to the present invention is subjected to an antistatic treatment. Any standard antistatic treatment may be used without limitation. For example, an antistatic layer is provided on the rear surface (surface remote from the pressure-sensitive adhesive layer) of the substrate, or a kneadable antistatic agent (kneading-type antistatic agent, electrification preventing agent) is compounded into the substrate.

Examples of the method for disposing an antistatic layer include a method of applying an antistatic agent, or an antistatic resin comprising an antistatic agent and a resin component, a conductive resin composition comprising a conductive substance and a resin component, or a conductive polymer, and a method of depositing or plating a conductive substance.

Examples of the antistatic agent include cationic antistatic agents having cationic functional groups (such as primary amino groups, secondary amino groups, and tertiary amino groups), such as quaternary ammonium salts and pyridinium salts; anionic antistatic agents having anionic functional groups, such as sulfonates, sulfate ester salts,

phosphonates, and phosphate ester salts; amphoteric antistatic agents, such as alkylbetaines and derivatives thereof, imidazolines and derivatives thereof, alanine and derivatives thereof; nonionic antistatic agents, such as amino alcohol and derivatives thereof, glycerol and derivatives thereof, polyethylene glycol and derivatives thereof; and ionic conductive polymers prepared by homopolymerization or copolymerization of monomers having ionic conductive groups exemplified in the cationic antistatic agents, the anionic antistatic agents, and the amphoteric antistatic agents.

Specific examples of the cationic antistatic agents include (meth)acrylate copolymers having quaternary ammonium groups, such as alkyltrimethylammonium salts, acyloylamidepropyltrimethylammonium methosulfate, alkylbenzylmethylammonium salts, acylcholine chloride, and polydimethylaminoethyl methacrylate; styrene copolymers having quaternary ammonium groups, such as poly(vinylbenzyl)trimethylammonium chloride; and diallylamine copolymers having quaternary ammonium groups, such as polydiallyldimethylammonium chloride. Examples of the anionic antistatic agents include alkylsulfonates, alkylbenzene sulfonates, alkylsulfate ester salts, alkylethoxysulfate ester salts, alkylphosphate ester salts, and sulfonate group-containing styrene copolymers. Examples of the amphoteric antistatic agents include alkylbetaines, alkylimidazoliumbetaines, and carbobetaine graft copolymers. Examples of the nonionic antistatic agents include fatty acid alkylolamides, di-(2-hydroxyethyl)alkylamine, polyoxyethylenealkylamines, fatty acid glycerol esters, polyoxyethylene glycol fatty acid esters, sorbitan fatty acid esters, polyoxysorbitan fatty acid esters, polyoxyethylene alkylphenyl ethers, polyoxyethylene alkylethers, polyethylene glycol, polyoxyethylenediamine, copolymers composed of polyethers, polyesters, and polyamides, and methoxypolyethylene glycol (meth)acrylate.

Examples of the conductive polymers include polyaniline, polypyrrole, and polythiophene.

Examples of the conductive substance include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, and alloys or mixtures thereof.

The resin component is a general-purpose resin, such as polyester, acrylic, polyvinyl, urethane, melamine, and epoxy resins. For a polymer antistatic agent, the antistatic resin does not need to contain such a resin component. The antistatic resin can contain a methylolated or alkylolated melamine, urea, glyoxal, or acrylamide compound, an epoxy compound, or an isocyanate compound as a crosslinking agent.

A typical method for forming the antistatic layer by application involves diluting the antistatic resin, the conductive polymer, or the conductive resin composition with an organic solvent or a solvent or dispersant such as water, applying the coating solution to a substrate, and drying the coating solution. Examples of the organic solvent include methyl ethyl ketone, acetone, ethyl acetate, tetrahydrofuran, dioxane, cyclohexanone, n-hexane, toluene, xylene, methanol, ethanol, n-propyl alcohol, and isopropyl alcohol. These may be used alone or in combination. Any known coating method is used, and specific examples thereof include roll coating, gravure coating, reverse coating, roll brush coating, spray coating, air knife coating, immersion, and curtain coating.

The antistatic layer prepared by the coating method (antistatic resin layer, conductive polymer layer, conductive resin composition layer) has a thickness of preferably 0.001 to 5 μm, and more preferably 0.005 to 1 μm.

Examples of the method for depositing or plating the conductive substance include vacuum deposition, sputtering, ion plating, chemical deposition, spray pyrolysis, chemical plating, and electroplating.

The antistatic layer (conductive substance layer) prepared by the deposition or plating has a thickness of preferably 20 to 10000 Å, and more preferably 50 to 5000 Å.

The preferred kneadable antistatic agents are the same as the antistatic agents described above. The amount of the kneadable antistatic agent to be compounded is preferably 20 wt% or less, and more preferably 0.05 to 10 wt% of the total weight (100 wt%) of the substrate. Any kneading process that can uniformly mix the kneadable antistatic agent with a resin used for a plastic substrate, for example, can be used without limitation. In general, mixing is carried out with a heat roll, a Banbury mixer, a pressure kneader, or a biaxial kneader.

The adhesive composition according to the present invention can prepare a removable pressure-sensitive adhesive layer having high adhesiveness and easy removability, and is used for preparing pressure-sensitive adhesive layers to be removed (for removal of pressure-sensitive adhesive layers). The pressure-sensitive adhesive sheet including the pressure-sensitive adhesive layer prepared from the adhesive composition according to the present invention is used in various applications for removal [such as masking tapes for construction materials, coatings of automobiles, electronic parts (such as lead frames and print substrates), and sandblasting; surface protective films for aluminum sash window frames, optical plastics, optical glasses, automobiles, and metal plates; adhesive tapes used in production of semiconductors and electronic parts, such as back grinding tapes, tapes for fixing pellicles, tapes for dicing, tapes for fixing lead frames, cleaning tapes, tapes for removing dust, carrier tapes, and cover tapes; tapes for packaging electronic apparatuses and electronic parts; tapes for temporary bonding during transportation; binding tapes; and labels].

The pressure-sensitive adhesive sheet according to the present invention, which is bonded to the adherent, causes no white contamination of the adherent and has low contamination. The pressure-sensitive adhesive sheet according to the present invention is preferably used for protection of surfaces of optical components (optical plastic, glass, and films) or surface protective films for these optical components, such as polarizing plates, retardation plates, anti-reflective plates, wavelength plates, optical compensation films, luminance enhancing films, which are components

of panels of liquid crystal displays, organic electroluminescent (organic EL) displays, and field emission displays requiring particularly low contamination. The pressure-sensitive adhesive sheet according to the present invention can be used in any field, such as protection of surfaces of micromachined parts (such as semiconductor circuits, a variety of print substrates, a variety of masks, and lead frames) against damages during the production steps, removal of foreign substances, and masking.

The adhesive composition according to the present invention contains the acrylic emulsion copolymers (A) as an essential component, and has low contamination. In the adhesive composition according to the present invention, the water-insoluble crosslinking agent (B) is compounded to further enhance removability and resistance against an increase in the adhesive strength. In addition to the water-insoluble crosslinking agent (B), the acetylene diol compound (C) is compounded to attain more stable dispersibility in water to reduce a poor appearance such as depressions of the surface of the pressure-sensitive adhesive layer which is attributed to many particle residues of the water-insoluble crosslinking agent (B) not sufficiently dispersed. The surfactant (D) having a number average molecular weight of 1200 to 4000 is compounded to attain higher resistance against an increase in the adhesive strength.

## Examples

The present invention will now be described in more detail according to non-limiting Examples. In the following description, "parts" and "%" are on the weight basis unless otherwise specified.

### Example 1

(Preparation of Acrylic emulsion polymer (A))

In a container, 90 parts by weight of water, raw material constitutive monomers, and a reactive surfactant (reactive surfactant containing no oxyalkylene group) in amounts shown in Table 1 were compounded, and were mixed by stirring in a homomixer to prepare a monomer emulsion.

In a reaction container provided with a cooling tube, a nitrogen introducing pipe, a thermometer, and a stirrer, 50 parts by weight of water, 0.01 parts by weight of a polymerization initiator (ammonium persulfate), and 10 wt% of the resulting monomer emulsion were added, and the monomer was emulsion-polymerized at 75°C for one hour with stirring. After 0.07 parts by weight of the polymerization initiator (ammonium persulfate) was added, the remaining monomer emulsion (90 wt%) was added over three hours with stirring. The reaction mixture was reacted at 75°C for three hours. The product was cooled to 30°C, and then 10 wt% aqueous ammonia was added to adjust the pH to 8 to prepare an aqueous dispersion of an acrylic emulsion polymer (concentration of the acrylic emulsion polymer: 41 wt%).

(Preparation of removable water-dispersible acrylic pressure-sensitive adhesive composition)

To 244 parts by weight of the resulting aqueous dispersion of an acrylic emulsion polymer (41 wt%) (100 parts by weight of the acrylic emulsion polymer), 2.5 parts by weight of a water-insoluble epoxy crosslinking agent [available from MITSUBISHI GAS CHEMICAL COMPANY, INC., trade name "Tetrad-C," 1,3-bis(N,N-diglycidylaminomethyl)cyclohexane, epoxy equivalent weight: 110, the number of functional groups: 4], 1 part by weight (1 part by weight as the acetylene diol compound) of an acetylene diol compound (composition) having an HLB value of 4 [available from Air Products and Chemicals, Inc., trade name "Surfynol 420," effective component 100 wt%], and 0.3 parts by weight pf polypropylene glycol [available from Adeka Corporation, trade name "Adeka Pluronic 25R-1," Mn: 2800, PO content: 90 wt%] were added, and were mixed by stirring in a stirrer at 23°C and 2000 rpm for 10 minutes. A removable water-dispersible acrylic pressure-sensitive adhesive composition was prepared.

(Preparation of pressure-sensitive adhesive layer and production of pressure-sensitive adhesive sheet)

The removable water-dispersible acrylic pressure-sensitive adhesive composition was applied to a corona-treated surface of a PET film (available from TOYOBO CO., LTD., trade name "E7415," thickness: 38 μm) with an applicator available from TESTER SANGYO CO,. LTD. into a dried thickness of 20 μm. The coating was dried with a hot air circulating oven at 120°C for two minutes, and was aged at 23°C for five days to produce a pressure-sensitive adhesive sheet.

### Examples 2 to 20, Comparative Examples 1 to 8

The types of the raw material constitutive monomers and the reactive surfactant, the amounts thereof compounded, and the amount of the surfactant (D) compounded were varied as shown in Tables 1, 2, and 3, and an acrylic

water-dispersible pressure-sensitive removable adhesive composition and a pressure-sensitive adhesive sheet was produced as in Example 1.

[Evaluation]

The pressure-sensitive adhesive sheets produced in Examples and Comparative Examples were evaluated by the following procedures.
The results of evaluation are shown in Tables 1, 2, and 3.

(1) Low contamination (reduction in white contamination) [humidity test]

The pressure-sensitive adhesive sheets (sample size: 25 mm×100 mm) produced in Examples and Comparative Examples each were bonded to a polarizing plate (available from NITTO DENKO CORPORATION, trade name "ARCHCT," 70 mm×120 mm) with a bonding machine (available from TESTER SANGYO CO,. LTD., compact bonding machine) at 0.15 MPa and 0.2 m/min.
The polarizing plate having the pressure-sensitive adhesive sheet bonded thereto was left to stand at 85°C for four hours, and the pressure-sensitive adhesive sheet was removed. The polarizing plate after removal of the pressure-sensitive adhesive sheet was placed under a humid environment (40°C, 92%RH) for 12 hours. The surface of the polarizing plate was visually observed in a darkroom with a fluorescent lamp to evaluate low contamination on the following criteria:

Good (○): no visible change between a portion to which the pressure-sensitive adhesive sheet is bonded and a portion to which no pressure-sensitive adhesive sheet is bonded.
Bad (×): whiteness found in a portion to which the pressure-sensitive adhesive sheet is bonded.

(2) Adhesive strength

(Initial adhesive strength)

The pressure-sensitive adhesive sheets (sample size: 25 mm×100 mm) produced in Examples and Comparative Examples each were bonded to a polarizing plate (material: triacetylcellulose (TAC), arithmetic average roughness of the surface Ra: approximately 21 nm in the MD direction, approximately 31 nm in the TD direction, approximately 26 nm as the average thereof) with a bonding machine (available from TESTER SANGYO CO, . LTD. , compact bonding machine) at 0.26 MPa and 0.3 m/min.
The sample composed of the pressure-sensitive adhesive sheet and the polarizing plate was left to stand under an environment of 23°C and 50%RH for 30 minutes, and was subjected to a 180° peeling test under the following conditions. The adhesive strength (N/25 mm) of the pressure-sensitive adhesive sheet to the polarizing plate was measured to be defined as "Initial adhesive strength."

(Adhesive strength after preservation of bonded adhesive sheet at 40°C for one week)

The pressure-sensitive adhesive sheets (sample size: 25 mm×100 mm) produced in Examples and Comparative Examples each were bonded to a polarizing plate (material: triacetylcellulose (TAC), arithmetic average roughness of the surface Ra: approximately 21 nm in the MD direction, approximately 31 nm in the TD direction, approximately 26 nm as the average thereof) with a bonding machine (available from TESTER SANGYO CO, . LTD. , compact bonding machine) at 0.26 MPa and 0.3 m/min.
The sample composed of the pressure-sensitive adhesive sheet and the polarizing plate was preserved under an environment of 40°C for one week, and was left to stand under an environment of 23°C and 50%RH for two hours. The sample was subjected to the 180° peeling test under the following conditions. The adhesive strength (N/25mm) of the pressure-sensitive adhesive sheet to the polarizing plate was measured to be defined as "Adhesive strength after preservation of the bonded adhesive sheet at 40°C for one week."
The 180° peeling test was performed with a tensile tester under an environment of 23°C and 50%RH at a tensile rate of 30 m/min.

(3) Surface tension of reactive surfactant

Each of the reactive surfactants used in Examples and Comparative Examples was diluted with ion exchange water to prepare 100 g of a 1 wt% sample aqueous solution. A bubble pressure dynamic surface tensiometer BP2 (trade

name, available from KRUSS GmbH) was set such that the tip of a Teflon (registered trademark) capillary having an inner diameter of 1.1 mm was positioned 1 cm below from the surface of the sample solution, and the dynamic surface tension at a surface age of 100 to 1000 msec was measured at 25°C. The lowest value of the dynamic surface tension at a surface age of 800 msec or less was defined as "Surface tension of the reactive surfactant (mN/m)."

(4) Percentage of adhesion

The pressure-sensitive adhesive sheets (sample size: 25 mm×100 mm) produced in Examples and Comparative Examples each were bonded to a polarizing plate (available from NITTO DENKO CORPORATION, trade name "AGS2B," 70 mm×120 mm) with a bonding machine (available from TESTER SANGYO CO,. LTD., compact bonding machine) at 0.15 MPa and 5.0 m/min.

Within 30 minutes after the pressure-sensitive adhesive sheet was bonded to the polarizing plate, the bonded surface between the pressure-sensitive adhesive sheet and the polarizing plate was observed with a digital microscope [digital microscope "VHX-200": available from Keyence Corporation] at a magnification of 100 times. The areas of contact portions between the pressure-sensitive adhesive sheet and the polarizing plate and non-contact portions therebetween (air bubble portions in which air bubbles were found between the pressure-sensitive adhesive sheet and the polarizing plate) were measured and calculated to be defined as "Area of contact portion ($\mu m^2$)" and "Area of air bubble portion ($\mu m^2$)," respectively. Based on "Area of contact portion" and "Area of air bubble portion," "Percentage of adhesion (%)" was calculated from the following expression:

Percentage of adhesion (%) = (area of contact portion ($\mu m^2$))/[(area of contact portion ($\mu m^2$))+(area of air bubble portion ($\mu m^2$))]×100

(5) Shear storage modulus (tanδ), loss tangent (G')

In each of the pressure-sensitive adhesive sheets produced in Examples and Comparative Examples, several pressure-sensitive adhesive sheets were layered such that the pressure-sensitive adhesive layer had a thickness of approximately 1. 5 mm. The shear storage modulus (tanδ) and loss tangent (G') were measured with an "Advanced Rheometric Expansion System (ARES)" available from Rheometric Scientific, Inc. in a shear mode under the following conditions: frequency: 1 Hz, temperature: -70 to 200°C, temperature raising rate: 5°C/min.

The maximum loss tangent at -60°C to -20°C is shown in "Maximum tanδ at -60 to -20°C." The loss tangent at 20°C is shown in "Tanδ at 20°C." The shear storage modulus at 20°C is shown in "G' at 20°C."

(6) Easy removability (DU)

A 100 mm×25 mm cut sheet was prepared from each of the pressure-sensitive adhesive sheets produced in Examples and Comparative Examples.

The adhesive surface of the cut sheet (surface to be measured) was press bonded to a triacetylcellulose polarizing plate not surface treated (trade name "SEG1425 DU," available from NITTO DENKO CORPORATION) by one reciprocating motion of a 2 kg roller under a 23°C atmosphere to produce a sample.

After the sample was left to stand in a 23°C and 50%RH atmosphere for 30 minutes, the sample was subjected to a 180° peeling test with a tensile tester to measure a 180° peel adhesive strength (units: N/25mm) to the triacetylcellulose polarizing plate not surface treated (SEG1425 DU). The measurement was performed under a 23°C and 50%RH atmosphere at a peeling angle of 180° and a tensile rate of 30 m/min.

The value obtained from the measurement is shown in "Easy removability DU."

(7) Easy removability (AGS2B)

A 100 mmx25 mm cut sheet was prepared from each of the pressure-sensitive adhesive sheets produced in Examples and Comparative Examples.

The adhesive surface of the cut sheet (surface to be measured) was press bonded to the irregular surface of a polarizing plate after an anti-glare treatment (trade name "AGS2B," available from NITTO DENKO CORPORATION, surface average roughness: 242 nm) by one reciprocating motion of a 2 kg roller under a 23°C atmosphere to produce a sample.

After the sample was left to stand in a 23°C and 50%RH atmosphere for 30 minutes, the sample was subjected to a 180° peeling test with a tensile tester to measure a 180° peel adhesive strength (units: N/25mm) to the polarizing plate after an anti-glare treatment (AGS2B). The measurement was performed under a 23°C and 50%RH atmosphere at a peeling angle of 180° and a tensile rate of 30 m/min.

The value obtained from the measurement is shown in "Easy removability AGS2B."

(8) Ratio of adhesive strengths [(adhesive strength to DU)/(adhesive strength to AGS2B)]

Based on "Easy removability DU" (180° peel adhesive strength to the triacetylcellulose polarizing plate not surface treated (SEG1425 DU)) and "Easy removability AGS2B" (180° peel adhesive strength to the polarizing plate after an anti-glare treatment (AGS2B)), the ratio of adhesive forces (adhesive strength to DU/adhesive strength to AGS2B) was calculated from the following expression. The results are shown in "Easy removability Ratio of adhesive strengths (adhesive strength to DU)/(adhesive strength to AGS2B)."

Ratio of adhesive strengths [(adhesive strength to DU)/(adhesive strength to AGS2B)] = ["Easy removability DU" (N/25 mm)]/["Easy removability AGS2B" (N/25 mm)]

(9) Contamination (under HC)

The pressure-sensitive adhesive sheets (sample size: 25 mm×100 mm) produced in Examples and Comparative Examples each were bonded to a polarizing plate (available from NITTO DENKO CORPORATION, trade name "SEG1425DUHC," 70 mm×120 mm) with a bonding machine (available from TESTER SANGYO CO,. LTD., compact bonding machine) at 0.25 MPa and 0.3 m/min.

The polarizing plate having the pressure-sensitive adhesive sheet bonded thereto was left to stand at 80°C for four hours, and the pressure-sensitive adhesive sheet was removed. The polarizing plate after removal of the pressure-sensitive adhesive sheet was left to stand under a humid environment (23°C, 90%RH) for 12 hours. The surface of the polarizing plate was visually observed to evaluate contamination on the following criteria:

Good (○): no visible change between a portion to which the pressure-sensitive adhesive sheet is bonded and a portion to which no pressure-sensitive adhesive sheet is bonded.
Bad (×): whiteness found in a portion to which the pressure-sensitive adhesive sheet is bonded.

[Table 1]

(Table 1)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Acrylic emulsion polymer (A) | Raw material constitutive monomers (parts by weight) | 2EHA | 92 | 92 | 92 | 92 | 96 | 92 | 92 | 92 | 92 | 92 |
| | | AA | 4 | 4 | 4 | 4 | 4 | 4 | 4 | 4 | 4 | 4 |
| | | MMA | 4 | 4 | 4 | 4 | 4 | 4 | 4 | 4 | 4 | 4 |
| | Reactive surfactant (parts by weight) | JS-20 | 3 | 2 | 1 | 3 | 3 | 3 | 3 | 3 | - | - |
| | | PD-201 | - | - | - | - | - | - | - | - | 3 | - |
| | | AO-90 | - | - | - | - | - | - | - | - | - | 3 |
| | | RS-3000 | - | - | - | - | - | - | - | - | - | - |
| | | KH-10 | - | - | - | - | - | - | - | - | - | - |
| | | SR-10 | - | - | - | - | - | - | - | - | - | - |
| | | SE-10 | - | - | - | - | - | - | - | - | - | - |
| | | MS-60 | - | - | - | - | - | - | - | - | - | - |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Removable water-dispersible acrylic pressure-sensitive adhesive composition | Acrylic emulsion polymer (A) (parts by weight) | | 100 | 100 | 100 | 100 | 100 | 100 | 100 | 100 | 100 | 100 |
| | Water-insoluble crosslinking agent (B) (parts by weight) | TETRAD-C | 2.5 | 2.5 | 2.5 | 2.5 | 3 | 2.5 | 3 | 3.5 | 2.5 | 2.5 |
| | Acetylene diol compound (C) having HLB of less than 13 (parts by weight) | Surfynol 420 (HLB=4) | 1 | 1 | 1 | 1 | - | 1 | 1 | 1 | 1 | 1 |
| | Surfactant (D) having PO content of 70 to 100 wt% and Mn of 1200 to 4000 (parts by weight) | Adeka Pluronic 25R-1 | 0.3 | 0.3 | 0.3 | - | - | 0.5 | 0.5 | 0.5 | 0.3 | 0.3 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Results of evaluation | Surface tension of reactive surfactant (mN/m) | | 32.6 | 32.6 | 32.6 | 32.6 | 32.6 | 32.6 | 32.6 | 32.6 | 31.5 | 38.8 |
| | Low contamination | | ○ | ○ | ○ | ○ | ○ | ○ | ○ | ○ | ○ | ○ |
| | Percentage of adhesion (%) | | 99.8 | 99.9 | 99.8 | 99.8 | 99.5 | 100 | 100 | 100 | 99.7 | 99.5 |
| | Adhesive strength | Initial adhesive strength (N/25mm) | 0.69 | 0.74 | 0.73 | 0.96 | 0.76 | 0.70 | 0.65 | 0.57 | 0.76 | 0.69 |
| | | Adhesive strength after preservation of bonded adhesive sheet at 40°C for one week (N/25mm) | 0.84 | 0.81 | 0.78 | 1.41 | 0.89 | 1.00 | 1.02 | 1.00 | 1.08 | 0.52 |

[Table 2]

(Table 2)

| | | | Example 11 | Example 12 | Example 13 | Example 14 | Example 15 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Acrylic emulsion polymer (A) | Raw material constitutive monomers (parts by weight) | 2EHA | 92 | 92 | 92 | 92 | 92 | 92 | 92 | 92 | 92 | 92 | 92 |
| | | AA | - | - | - | - | - | 4 | 4 | 4 | 4 | 4 | 4 |
| | | MMA | 4 | 4 | 4 | 4 | 4 | 4 | 4 | 4 | 4 | 4 | 4 |
| | Reactive surfactant (parts by weight) | JS-20 | - | - | - | - | - | - | - | - | - | - | - |
| | | PD-201 | - | - | - | - | - | - | - | - | - | - | - |
| | | AO-90 | 3 | 3 | 3 | 2 | 1 | - | - | - | - | - | - |
| | | RS-3000 | - | - | - | - | - | 3 | 3 | - | - | - | - |
| | | KH-10 | - | - | - | - | - | - | - | 2 | - | - | - |
| | | SR-10 | - | - | - | - | - | - | - | - | 2 | - | - |
| | | SE-10 | - | - | - | - | - | - | - | - | - | 2 | - |
| | | MS-60 | - | - | - | - | - | - | - | - | - | - | 3 |

(continued)

| | | | Example 11 | Example 12 | Example 13 | Example 14 | Example 15 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Removable water-dispersible acrylic pressure-sensitive adhesive composition | Acrylic emulsion polymer (A) | | 100 | 100 | 100 | 100 | 100 | 100 | 100 | 100 | 100 | 100 | 100 |
| | Water-insoluble crosslinking agent (B) (parts by weight) | TETRAD-C | 2.5 | 2 | 3 | 2.5 | 2.5 | 2.5 | 3 | 3 | 3 | 3 | 3 |
| | Acetylene diol compound (C) having HLB of less than 13 (parts by weight) | Surfynol 420 (HLB=4) | 1 | 1 | 1 | 1 | 1 | 1 | 1 | 1 | 1 | 1 | 1 |
| | Surfactant (D) having PO content of 70 to 100 wt% and Mn of 1200 to 4000 (parts by weight) | Adeka Pluronic 25R-1 | - | 0.3 | 0.3 | 0.3 | 0.3 | 0.3 | 0.3 | - | - | - | 0.3 |

(continued)

| | | | Example 11 | Example 12 | Example 13 | Example 14 | Example 15 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Results of evaluation | Surface tension of reactive surfactant (mN/m) | | 38.8 | 38.8 | 38.8 | 38.8 | 38.8 | 39.2 | 39.2 | 40.1 | 40.4 | 44.3 | 39.2 |
| | Low contamination | | ○ | ○ | ○ | ○ | ○ | × | × | × | × | × | × |
| | Percentage of adhesion (%) | | 99.9 | 99.9 | 99.9 | 99.8 | 100 | 99.5 | 99.3 | 99.2 | 99.0 | 99.4 | 99.8 |
| | Adhesive strength | Initial adhesive strength (N/25mm) | 1.17 | 0.85 | 0.80 | 1.02 | 1.25 | 0.66 | 0.69 | 1.47 | 1.27 | 1.53 | 1.05 |
| | | Adhesive strength after preservation of bonded adhesive sheet at 40°C for one week (N/25mm) | 1.49 | 0.99 | 1.35 | 1.60 | 2.98 | 0.68 | 0.81 | 1.67 | 2.13 | 1.90 | 1.30 |

[Table 3]

(Table 3)

| | | | Example 16 | Example 17 | Example 18 | Example 19 | Example 20 | Comparative Example 7 | Comparative Example 8 |
|---|---|---|---|---|---|---|---|---|---|
| Acrylic emulsion polymer (A) | Raw material constitutive monomers (parts by weight) | 2EHA | 92 | 92 | 92 | 92 | 92 | 49 | 49 |
| | | BA | - | - | - | - | - | 49 | 49 |
| | | MMA | 4 | 4 | 4 | 4 | 4 | - | - |
| | | AA | 4 | 4 | 4 | 4 | 4 | 2 | 2 |
| | Reactive surfactant (parts by weight) | JS-20 | 3 | 3 | 3 | 3 | 3 | - | - |
| | | BC-2020 | - | - | - | - | - | 2 | 2 |
| Removable water-dispersible acrylic pressure-sensitive adhesive composition | Acrylic emulsion polymer (A) (parts by weight) | | 100 | 100 | 100 | 100 | 100 | 100 | 100 |
| | Water-insoluble crosslinking agent (B) (parts by weight) | TETRAD-C | 2 | 2.5 | 6.5 | 1 | - | 6 | 8 |
| | Water-soluble crosslinking agent (parts by weight) | WS-500 | - | - | - | - | 8 | - | - |
| Results of evaluation | tanδ | Maximum at -60 to-20°C | 1.04 | 1.05 | 0.93 | 1.09 | 1.46 | 0.95 | 0.80 |
| | | At 20°C | 0.15 | 0.11 | 0.09 | 0.21 | 0.36 | 0.42 | 0.40 |
| | G' | At 20°C | $2.03\times10^5$ | $2.26\times10^5$ | $2.14\times10^5$ | $9.20\times10^4$ | $1.02\times10^5$ | $2.98\times10^5$ | $2.95\times10^5$ |
| | Easy removability | DU | 1.2 | 1.3 | 0.63 | 2.2 | 6.1 | 0.17 | 0.20 |
| | | AGS2B | 0.46 | 0.53 | 0.33 | 0.65 | 3.0 | 0.11 | 0.10 |
| | | Ratio of adhesive strengths (adhesive strength to DU)/(adhesive strength to AGS2B) | 2.6 | 2.5 | 1.9 | 3.4 | 2.0 | 1.5 | 2.0 |

(continued)

| | | Example 16 | Example 17 | Example 18 | Example 19 | Example 20 | Comparative Example 7 | Comparative Example 8 |
|---|---|---|---|---|---|---|---|---|
| | Percentage of adhesion (%) | 99.9 | 99.8 | 95.3 | 100 | 99.9 | 94.2 | 93.8 |
| | Contamination (under HC) | ○ | ○ | ○ | ○ | Δ | × | × |

Examples 5 and 6-20 are for reference purpose (not according to the invention)

Abbreviations used in Tables 1, 2, and 3 are shown below. In Tables 1, 2, and 3, the amounts of the components compounded in the acrylic pressure-sensitive adhesive composition are shown as real amounts thereof compounded (amounts compounded in a product). The amount of the acrylic emulsion polymer (A) is shown as the weight of the solid content.

(Raw material constitutive monomers)

2EHA: 2-ethylhexyl acrylate
MMA: methyl methacrylate
BA: n-butyl acrylate
AA: acrylic acid

(Reactive surfactant)

JS-20: trade name "ELEMINOL JS-20," available from Sanyo Chemical Industries, Ltd. (anionic reactive emulsifier containing no oxyalkylene group, compound having a structure represented by Formula (1))
PD-201: trade name "LATEMUL PD-201," available from Kao Corporation (anionic reactive emulsifier containing no oxyalkylene group, compound having a structure represented by Formula (1))
AO-90 : trade name "NEOGEN AO-90, " available from Dai-ichi Kogyo Seiyaku Co. , Ltd. (anionic reactive emulsifier containing no oxyalkylene group)
RS-3000: trade name "ELEMINOL RS-3000" available from Sanyo Chemical Industries, Ltd. (anionic reactive emulsifier containing an oxyalkylene group)
KH-10: trade name "Aqualon KH-10" available from Dai-ichi Kogyo Seiyaku Co. , Ltd. (anionic reactive emulsifier containing an oxyalkylene group)
SR-10: trade name "ADEKA REASOAP SR-10," available from Adeka Corporation (anionic reactive emulsifier containing an oxyalkylene group)
SE-10: trade name "ADEKA REASOAP SE-10," available from Adeka Corporation (anionic reactive emulsifier containing an oxyalkylene group)
MS-60: trade name "Antox MS-60," available from NIPPON NYUKAZAI CO., LTD. (anionic reactive emulsifier containing an oxyalkylene group)
BC-2020: trade name "Aqualon BC-2020," available from Dai-ichi Kogyo Seiyaku Co., Ltd. (anionic reactive emulsifier containing an oxyalkylene group)

(Water-insoluble crosslinking agent)

TETRAD-C: trade name "TETRAD-C," available from MITSUBISHI GAS CHEMICAL COMPANY, INC. (1,3-bis(N,N-diglycidylaminomethyl)cyclohexane, epoxy equivalent weight: 110, the number of functional groups: 4) (Water-soluble crosslinking agent)
WS-500: trade name "EPOCROS WS-500" available from NIPPON SHOKUBAI CO., LTD. (oxazoline group-containing water-soluble crosslinking agent)

(Acetylene diol compound)

Surfynol 420: trade name "Surfynol 420," available from Air Products and Chemicals, Inc. (HLB value: 4, effective component: 100 wt%)

(Surfactant (D))

Adeka Pluronic 25R-1: trade name "Adeka Pluronic 25R-1," available from Adeka Corporation (number average molecular weight: 2800, PO content: 90 wt%, effective component: 100 wt%)

Tables 1, 2, and 3 evidentially show that the pressure-sensitive adhesive sheets (Examples 1 to 19) including the pressure-sensitive adhesive layers prepared from the adhesive compositions satisfying the requirements of the present invention had low contamination, and caused no white contamination under a highly humid environment in the polarizing plates after bonding and removal of the adhesive sheets.

In contrast, the pressure-sensitive adhesive sheets (Comparative Examples 1 to 8) including the pressure-sensitive adhesive layers prepared from the adhesive compositions containing the acrylic emulsion polymers polymerized with the reactive surfactants containing an oxyalkylene group had high contamination.

Industrial Applicability

The removable water-dispersible acrylic pressure-sensitive adhesive composition according to the present invention can provide a removable pressure-sensitive adhesive layer having high adhesiveness and easy removability. The pressure-sensitive adhesive sheet including the pressure-sensitive adhesive layer prepared from the adhesive composition according to the present invention can be used in various applications for removal.

The pressure-sensitive adhesive sheet including the pressure-sensitive adhesive layer prepared from the removable water-dispersible acrylic pressure-sensitive adhesive composition according to the present invention, which is bonded to an adherent, causes no white contamination in the adherent, and has low contamination. Such a pressure-sensitive adhesive sheet can be used for protection of surfaces of optical components (optical plastic, glass, and films) or surface protective films for these optical components, such as polarizing plates, retardation plates, anti-reflective plates, wavelength plates, optical compensation films, and luminance enhancing films, which are components of panels of liquid crystal displays, organic electroluminescent (organic EL) displays, and field emission displays requiring particularly low contamination.

## Claims

**1.** A removable water-dispersible acrylic pressure-sensitive adhesive composition comprising:

an acrylic emulsion polymer (A) including an alkyl (meth)acrylate ester and a carboxyl-containing unsaturated monomer as essential raw material constitutive monomers and prepared by polymerization with a reactive surfactant containing no oxyalkylene group;
a water-insoluble crosslinking agent (B); and
an acetylene diol compound (C) having an HLB value of less than 13, the amount of the acetylene diol compound (C) in the adhesive composition being 0.01 to 10 parts by weight of 100 parts by weight of the acrylic emulsion polymer (A).

**2.** The removable water-dispersible acrylic pressure-sensitive adhesive composition according to claim 1, wherein the reactive surfactant containing no oxyalkylene group is an anionic reactive surfactant containing no oxyalkylene group.

**3.** The removable water-dispersible acrylic pressure-sensitive adhesive composition according to claim 1 or 2, wherein a 1 wt% aqueous solution of reactive surfactant containing no oxyalkylene group has a surface tension of 39.0 mN/m or less at a surface age of 800 msec or less, determined by the following method:

The reactive surfactant is diluted with ion exchange water to prepare 100 g of a 1 wt% aqueous sample solution of reactive surfactant containing no oxyalkylene group. A bubble pressure dynamic surface tensiometer BP2 (available from KRUSS GmbH) is set such that the tip of a Teflon (registered trademark) capillary having an inner diameter of 1.10 mm is positioned 1 cm below from the surface of the sample solution at 25°C, and the dynamic surface tension at a surface age of 100 to 1000 msec is measured. The lowest value of the dynamic surface tension at a surface age of 800 msec or less is defined as the "surface tension at a surface age of 800 msec or less of the 1 wt% aqueous solution of reactive surfactant containing no oxyalkylene group.".

4. The removable water-dispersible acrylic pressure-sensitive adhesive composition according to claim 3, wherein the 1 wt% aqueous solution of reactive surfactant containing no oxyalkylene group has a surface tension of 25.0 to 39.0 mN/m at a surface age of 800 msec or less.

5. The removable water-dispersible acrylic pressure-sensitive adhesive composition according to any one of claims 1 to 4, wherein a content of the carboxyl group-containing unsaturated monomer is 0.5 to 10 percent by weight based on the total amount (100 percent by weight) of the raw material constitutive monomers for preparing the acrylic emulsion polymer (A).

6. The removable water-dispersible acrylic pressure-sensitive adhesive composition according to any one of claims 1 to 5, wherein the proportion of the reactive surfactant containing no oxyalkylene group is 0.1 to 10 parts by weight based on the total amount (100 parts by weight) of the raw material constitutive monomers for preparing the acrylic emulsion polymer (A).

7. The removable water-dispersible acrylic pressure-sensitive adhesive composition according to any one of claims 1 to 6, wherein the removable water-dispersible acrylic pressure-sensitive adhesive composition in the form of a pressure-sensitive adhesive layer has a maximum loss tangent of 1.08 or less between -60°C and -20°C and a shear storage modulus of $2.90 \times 10^5$ Pa or less at 20°C which are determined by a dynamic viscoelastic measurement.

8. The removable water-dispersible acrylic pressure-sensitive adhesive composition according to any one of claims 1 to 7, wherein the alkyl (meth)acrylate ester contains an alkyl (meth)acrylate ester having an alkyl group having 8 to 12 carbon atoms.

9. The removable water-dispersible acrylic pressure-sensitive adhesive composition according to any one of claims 1 to 8, wherein the removable water-dispersible acrylic pressure-sensitive adhesive composition in the form of a pressure-sensitive adhesive layer has a loss tangent of 0.08 or more at 20°C which is determined by a dynamic viscoelastic measurement.

10. The removable water-dispersible acrylic pressure-sensitive adhesive composition according to claim 1, wherein the water-insoluble crosslinking agent (B) has two or more functional groups reactive with the carboxyl groups in one molecule.

11. The removable water-dispersible acrylic pressure-sensitive adhesive composition according to any one of claims 1 to 10, further comprising a surfactant (D) having a number average molecular weight of 1200 to 4000.

12. The removable water-dispersible acrylic pressure-sensitive adhesive composition according to claim 11, wherein the surfactant (D) having a number average molecular weight of 1200 to 4000 is a surfactant selected from the group consisting of compounds represented by Formulae (I), (II), and (III):

$$R^aO\text{-}(PO)_{n1}(EO)_{m1}\text{-}CO\text{-}R^b \qquad (I),$$

wherein PO represents an oxypropylene group; EO represents an oxyethylene group; $R^a$ represents an alkyl or alkenyl group having 8 to 22 carbon atoms or an alkylcarbonyl or alkenylcarbonyl group having 8 to 21 carbon atoms; $R^b$ represents an alkyl or alkenyl group having 8 to 21 carbon atoms; m1 represents an integer of 0 to 15; n1 represents an integer of 1 or more; the form of addition of EO and PO is random addition or block addition;

$$R^cO\text{-}(PO)_{n2}(EO)_{m2}\text{-}H \qquad (II),$$

wherein PO represents an oxypropylene group; EO represents an oxyethylene group; $R^c$ represents a nonylphenyl group, an octylphenyl group, or an alkyl or alkenyl group having 8 to 22 carbon atoms; m2 represents an integer of 0 to 20; n2 represents an integer of 1 or more; the form of addition of EO and PO is random addition or block addition;

$$HO\text{-}(PO)_{n3}(EO)_{m3}\text{-}H \qquad (III),$$

wherein PO represents an oxypropylene group; EO represents an oxyethylene group; m3 represents an integer of 0 to 40; n3 represents an integer of 1 or more; the form of addition of EO and PO is random addition or block addition.

13. The removable water-dispersible acrylic pressure-sensitive adhesive composition according to claim 11 or 12, wherein a content of propylene oxide in the surfactant (D) having a number average molecular weight of 1200 to 4000 is 70 to 100 wt%.

**14.** A pressure-sensitive adhesive sheet, comprising a substrate and a pressure-sensitive adhesive layer disposed at least one side of the substrate, the pressure-sensitive adhesive layer comprising the removable water-dispersible acrylic pressure-sensitive adhesive composition according to any one of claims 1 to 13.

**15.** The pressure-sensitive adhesive sheet according to claim 14 which is a surface protective film for an optical component.

**16.** An optical component, comprising the pressure-sensitive adhesive sheet according to claim 14 or 15.

**Patentansprüche**

**1.** Entfernbare wasserdispergierbare Acrylhaftklebstoffzusammensetzung, umfassend:

ein Acrylemulsionspolymer (A), das einen Alkyl(meth)acrylatester und ein carboxylhaltiges ungesättigtes Monomer als wesentliche das Ausgangsmaterial konstituierende Monomere einschließt und durch Polymerisation mit einem reaktiven oberflächenaktiven Stoff, der keine Oxyalkylengruppe enthält, hergestellt wird;
ein wasserunlösliches Vernetzungsmittel (B); und
eine Acetylendiolverbindung (C) mit einem HLB-Wert von weniger als 13, wobei die Menge der Acetylendiolverbindung (C) in der Klebstoffzusammensetzung 0,01 bis 10 Gewichtsteile von 100 Gewichtsteilen des Acrylemulsionspolymers (A) beträgt.

**2.** Entfernbare wasserdispergierbare Acrylhaftklebstoffzusammensetzung gemäß Anspruch 1, wobei der reaktive oberflächenaktive Stoff, der keine Oxyalkylengruppe enthält, ein anionischer reaktiver oberflächenaktiver Stoff, der keine Oxyalkylengruppe enthält, ist.

**3.** Entfernbare wasserdispergierbare Acrylhaftklebstoffzusammensetzung gemäß Anspruch 1 oder 2, wobei eine 1-gewichtsprozentige wässrige Lösung des reaktiven oberflächenaktiven Stoffs, der keine Oxyalkylengruppe enthält, eine Oberflächenspannung von 39,0 mN/m oder weniger bei einem Oberflächenalter von 800 ms oder weniger aufweist, bestimmt durch das folgende Verfahren:

Der reaktive oberflächenaktive Stoff wird mit Ionenaustauschwasser verdünnt, um 100 g einer 1-gewichtsprozentigen wässrigen Probenlösung des reaktiven oberflächenaktiven Stoffs, der keine Oxyalkylengruppe enthält, herzustellen. Ein Blasendrucktensiometer zur Bestimmung der dynamischen Oberflächenspannung BP2 (erhältlich von KRUSS GmbH) wird so eingestellt, dass die Spitze einer Teflon(eingetragene Marke)-Kapillare mit einem Innendurchmesser von 1,10 mm 1 cm unter der Oberfläche der Probenlösung bei 25°C positioniert wird, und die dynamische Oberflächenspannung bei einem Oberflächenalter von 100 bis 1000 ms wird gemessen. Der niedrigste Wert der dynamischen Oberflächenspannung bei einem Oberflächenalter von 800 ms oder weniger wird als die "Oberflächenspannung bei einem Oberflächenalter von 800 ms oder weniger der 1-gewichtsprozentigen wässrigen Lösung des reaktiven oberflächenaktiven Stoffs, der keine Oxyalkylengruppe enthält" definiert.

**4.** Entfernbare wasserdispergierbare Acrylhaftklebstoffzusammensetzung gemäß Anspruch 3, wobei die 1-gewichtsprozentige wässrige Lösung des reaktiven oberflächenaktiven Stoffs, der keine Oxyalkylengruppe enthält, eine Oberflächenspannung von 25,0 bis 39,0 mN/m bei einem Oberflächenalter von 800 ms oder weniger aufweist.

**5.** Entfernbare wasserdispergierbare Acrylhaftklebstoffzusammensetzung gemäß einem der Ansprüche 1 bis 4, wobei ein Gehalt des eine Carboxylgruppe enthaltenden ungesättigten Monomers 0,5 bis 10 Gew.-%, bezogen auf die Gesamtmenge (100 Gew.-%) der das Ausgangsmaterial konstituierenden Monomere zum Herstellen des Acrylemulsionspolymers (A), beträgt.

**6.** Entfernbare wasserdispergierbare Acrylhaftklebstoffzusammensetzung gemäß einem der Ansprüche 1 bis 5, wobei der Anteil des reaktiven oberflächenaktiven Stoffs, der keine Oxyalkylengruppe enthält, 0,1 bis 10 Gewichtsteile, bezogen auf die Gesamtmenge (100 Gewichtsteile) der das Ausgangsmaterial konstituierenden Monomere zum Herstellen des Acrylemulsionspolymers (A), beträgt.

7. Entfernbare wasserdispergierbare Acrylhaftklebstoffzusammensetzung gemäß einem der Ansprüche 1 bis 6, wobei die entfernbare wasserdispergierbare Acrylhaftklebstoffzusammensetzung in Form einer Haftklebstoffschicht eine maximale Verlusttangente von 1,08 oder weniger zwischen -60°C und -20°C und einen Scherspeichermodul von $2{,}90 \times 10^5$ Pa oder weniger bei 20°C aufweist, welche durch eine dynamische viskoelastische Messung bestimmt werden.

8. Entfernbare wasserdispergierbare Acrylhaftklebstoffzusammensetzung gemäß einem der Ansprüche 1 bis 7, wobei der Alkyl(meth)acrylatester einen Alkyl(meth)acrylatester mit einer Alkylgruppe mit 8 bis 12 Kohlenstoffatomen enthält.

9. Entfernbare wasserdispergierbare Acrylhaftklebstoffzusammensetzung gemäß einem der Ansprüche 1 bis 8, wobei die entfernbare wasserdispergierbare Acrylhaftklebstoffzusammensetzung in Form einer Haftklebstoffschicht eine Verlusttangente von 0,08 oder mehr bei 20°C aufweist, welche durch eine dynamische viskoelastische Messung bestimmt wird.

10. Entfernbare wasserdispergierbare Acrylhaftklebstoffzusammensetzung gemäß Anspruch 1, wobei das wasserunlösliche Vernetzungsmittel (B) zwei oder mehr funktionelle Gruppen aufweist, die mit den Carboxylgruppen in einem Molekül reaktionsfähig sind.

11. Entfernbare wasserdispergierbare Acrylhaftklebstoffzusammensetzung gemäß einem der Ansprüche 1 bis 10, außerdem umfassend einen oberflächenaktiven Stoff (D) mit einem Zahlenmittel des Molekulargewichts von 1200 bis 4000.

12. Entfernbare wasserdispergierbare Acrylhaftklebstoffzusammensetzung gemäß Anspruch 11, wobei der oberflächenaktive Stoff (D) mit einem Zahlenmittel des Molekulargewichts von 1200 bis 4000 ein oberflächenaktiver Stoff ist, der ausgewählt ist aus der Gruppe bestehend aus Verbindungen, die durch die Formeln (I), (II) und (III) wiedergegeben sind:

$$R^aO\text{-}(PO)_{n1}(EO)_{m1}\text{-}CO\text{-}R^b \quad (I),$$

worin PO eine Oxypropylengruppe bedeutet; EO eine Oxyethylengruppe bedeutet; $R^a$ eine Alkyl- oder Alkenylgruppe mit 8 bis 22 Kohlenstoffatomen oder eine Alkylcarbonyl- oder Alkenylcarbonylgruppe mit 8 bis 21 Kohlenstoffatomen bedeutet; $R^b$ eine Alkyl- oder Alkenylgruppe mit 8 bis 21 Kohlenstoffatomen bedeutet; m1 eine ganze Zahl von 0 bis 15 bedeutet; n1 eine ganze Zahl von 1 oder mehr bedeutet; die Form der Addition von EO und PO eine statistische Addition oder Blockaddition ist;

$$R^cO\text{-}(PO)_{n2}(EO)_{m2}\text{-}H \quad (II),$$

worin PO eine Oxypropylengruppe bedeutet; EO eine Oxyethylengruppe bedeutet; $R^c$ eine Nonylphenylgruppe, eine Octylphenylgruppe oder eine Alkyl- oder Alkenylgruppe mit 8 bis 22 Kohlenstoffatomen bedeutet; m2 eine ganze Zahl von 0 bis 20 bedeutet; n2 eine ganze Zahl von 1 oder mehr bedeutet; die Form der Addition von EO und PO eine statistische Addition oder Blockaddition ist;

$$HO\text{-}(PO)_{n3}(EO)_{m3}\text{-}H \quad (III),$$

worin PO eine Oxypropylengruppe bedeutet; EO eine Oxyethylengruppe bedeutet; m3 eine ganze Zahl von 0 bis 40 bedeutet; n3 eine ganze Zahl von 1 oder mehr bedeutet; die Form der Addition von EO und PO eine statistische Addition oder Blockaddition ist.

13. Entfernbare wasserdispergierbare Acrylhaftklebstoffzusammensetzung gemäß Anspruch 11 oder 12, wobei ein Gehalt von Propylenoxid in dem oberflächenaktiven Stoff (D) mit einem Zahlenmittel des Molekulargewichts von 1200 bis 4000 70 bis 100 Gew.-% beträgt.

14. Haftklebefolie, umfassend ein Substrat und eine Haftklebstoffschicht, die auf wenigstens einer Seite des Substrats angeordnet ist, wobei die Haftklebstoffschicht die entfernbare wasserdispergierbare Acrylhaftklebstoffzusammensetzung gemäß einem der Ansprüche 1 bis 13 umfasst.

15. Haftklebefolie gemäß Anspruch 14, welche ein Oberflächenschutzfilm für eine optische Komponente ist.

**16.** Optische Komponente, umfassend die Haftklebefolie gemäß Anspruch 14 oder 15.

**Revendications**

**1.** Composition acrylique adhésive détachable sensible à la pression pouvant être dispersée dans l'eau comprenant :

un polymère en émulsion acrylique (A) incluant un ester (méth)acrylate d'alkyle et un monomère insaturé contenant un groupe carboxyle comme monomères essentiels constitutifs formant matière première et préparé par polymérisation avec un tensioactif réactif ne contenant pas de groupe oxyalcylène ;
un agent de réticulation insoluble dans l'eau (B) ; et
un composé acétylène diol (C) ayant une valeur HLB inférieure à 13, la quantité de composé acétylène diol (C) dans la composition adhésive étant de 0,01 à 10 parties en poids de 100 parties en poids du polymère en émulsion acrylique (A).

**2.** Composition acrylique adhésive détachable sensible à la pression pouvant être dispersée dans l'eau selon la revendication 1, dans laquelle le tensioactif réactif ne contenant pas de groupe oxyalcylène est un tensioactif réactif anionique ne contenant pas de groupe oxyalcylène.

**3.** Composition acrylique adhésive détachable sensible à la pression pouvant être dispersée dans l'eau selon la revendication 1 ou 2, dans laquelle une solution aqueuse à 1 % en pds du tensioactif réactif ne contenant pas de groupe oxyalcylène présente une tension superficielle de 39,0 mN/m ou moins à un âge de surface de 800 msec ou moins, déterminée selon les procédés suivants :

le tensioactif réactif est dilué avec de l'eau échangeuse d'ions pour préparer 100 g d'une solution échantillon aqueuse à 1 % en pds du tensioactif réactif ne contenant pas de groupe oxyalcylène. Un tensiomètre à surface dynamique sous pression de bulle BP2 (disponible auprès de KRUSS GmbH) est paramétré de sorte que l'extrémité d'un capillaire en téflon (marque déposée enregistrée) présentant un diamètre interne de 1,10 mm soit positionnée à 1 cm en dessous de la surface de la solution échantillon à 25°C, et la tension superficielle dynamique à un âge de surface de 100 à 1 000 msec est mesurée. La valeur inférieure de la tension superficielle dynamique à un âge de surface de 800 msec ou moins est définie comme étant la « tension superficielle à un âge de surface de 800 msec ou moins de la solution aqueuse à 1 % en pds du tensioactif réactif ne contenant pas de groupe oxyalcylène ».

**4.** Composition acrylique adhésive détachable sensible à la pression pouvant être dispersée dans l'eau selon la revendication 3, dans laquelle la solution aqueuse à 1 % en pds du tensioactif réactif ne contenant pas de groupe oxyalcylène présente une tension superficielle de 25,0 à 39,0 mN/m à un âge de surface de 800 msec ou moins.

**5.** Composition acrylique adhésive détachable sensible à la pression pouvant être dispersée dans l'eau selon l'une quelconque des revendications 1 à 4, dans laquelle une teneur du monomère insaturé contenant un groupe carboxyle est de 0,5 à 10 pour cent en poids sur la base de la quantité totale (100 pour cent en poids) des monomères constitutifs formant matière première pour la préparation du polymère en émulsion acrylique (A).

**6.** Composition acrylique adhésive détachable sensible à la pression pouvant être dispersée dans l'eau selon l'une quelconque des revendications 1 à 5, dans laquelle la proportion du tensioactif réactif ne contenant pas de groupe oxyalcylène est de 0,1 à 10 parties en poids sur la base de la quantité totale (100 parties en poids) des monomères constitutifs formant matière première pour la préparation du polymère en émulsion acrylique (A).

**7.** Composition acrylique adhésive détachable sensible à la pression pouvant être dispersée dans l'eau selon l'une quelconque des revendications 1 à 6, dans laquelle la composition acrylique adhésive détachable sensible à la pression pouvant être dispersée dans l'eau sous la forme d'une couche adhésive sensible à la pression présente une tangente de perte maximale de 1,08 ou moins entre -60°C et -20°C et un module d'élasticité en cisaillement au stockage de 2,90 x $10^5$ Pa ou moins à 20°C qui sont déterminés grâce à une mesure de la viscoélasticité dynamique.

**8.** Composition acrylique adhésive détachable sensible à la pression pouvant être dispersée dans l'eau selon l'une quelconque des revendications 1 à 7, dans laquelle l'ester (méth)acrylate d'alkyle contient un ester (méth)acrylate d'alkyle ayant un groupe alkyle présentant de 8 à 12 atomes de carbone.

**9.** Composition acrylique adhésive détachable sensible à la pression pouvant être dispersée dans l'eau selon l'une quelconque des revendications 1 à 8, la composition acrylique adhésive détachable sensible à la pression pouvant être dispersée dans l'eau sous la forme d'une couche adhésive sensible à la pression présentant une tangente de perte de 0,08 ou plus à 20°C qui est déterminée grâce à une mesure de la viscoélasticité dynamique.

**10.** Composition acrylique adhésive détachable sensible à la pression pouvant être dispersée dans l'eau selon la revendication 1, dans laquelle l'agent de réticulation insoluble dans l'eau (B) présente deux groupes fonctionnels ou plus réactifs avec les groupes carboxyle dans une molécule.

**11.** Composition acrylique adhésive détachable sensible à la pression pouvant être dispersée dans l'eau selon l'une quelconque des revendications 1 à 10, comprenant en outre un tensioactif (D) présentant un poids moléculaire moyen en nombre de 1 200 à 4 000.

**12.** Composition acrylique adhésive détachable sensible à la pression pouvant être dispersée dans l'eau selon la revendication 11, dans laquelle le tensioactif (D) présentant un poids moléculaire moyen en nombre de 1 200 à 4 000 est un tensioactif sélectionné dans le groupe constitué des composés représentés par les Formules (I), (II), et (III) :

$$R^aO\text{-}(PO)_{n1}(EO)_{m1}\text{-}CO\text{-}R^b \qquad (I),$$

dans laquelle PO représente un groupe oxypropylène ; EO représente un groupe oxyéthylène ; $R^a$ représente un groupe alkyle ou alcényle présentant de 8 à 22 atomes de carbone ou un groupe alkylcarbonyle ou alcénylcarbonyle présentant de 8 à 21 atomes de carbone ; $R^b$ représente un groupe alkyle ou alcényle présentant de 8 à 21 atomes de carbone ; m1 représente un nombre entier d'une valeur de 0 à 15 ; n1 représente un nombre entier d'une valeur de 1 ou plus ; la forme d'addition d'EO et PO est l'addition aléatoire ou l'addition séquencée ;

$$R^cO\text{-}(PO)_{n2}(EO)_{m2}\text{-}H \qquad (II),$$

dans laquelle PO représente un groupe oxypropylène ; EO représente un groupe oxyéthylène ; $R^c$ représente un groupe nonylphényle, un groupe octylphényle, ou un groupe alkyle ou alcényle présentant de 8 à 22 atomes de carbone ; m2 représente un nombre entier d'une valeur de 0 à 20 ; n2 représente un nombre entier d'une valeur de 1 ou plus ; la forme d'addition d'EO et PO est l'addition aléatoire ou l'addition séquencée ;

$$HO\text{-}(PO)_{n3}(EO)_{m3}\text{-}H \qquad (III),$$

dans laquelle PO représente un groupe oxypropylène ; EO représente un groupe oxyéthylène ; m3 représente un nombre entier d'une valeur de 0 à 40 ; n3 représente un nombre entier d'une valeur de 1 ou plus ; la forme d'addition d'EO et PO est l'addition aléatoire ou l'addition séquencée.

**13.** Composition acrylique adhésive détachable sensible à la pression pouvant être dispersée dans l'eau selon la revendication 11 ou 12, dans laquelle une teneur de l'oxyde de propylène dans le tensioactif (D) présentant un poids moléculaire moyen en nombre de 1 200 à 4 000 est de 70 à 100 % en pds.

**14.** Feuille adhésive sensible à la pression, comprenant un substrat et une couche adhésive sensible à la pression disposée au moins sur un côté du substrat, la couche adhésive sensible à la pression comprenant la composition acrylique adhésive détachable sensible à la pression pouvant être dispersée dans l'eau selon l'une quelconque des revendications 1 à 13.

**15.** Feuille adhésive sensible à la pression selon la revendication 14 qui est un film protecteur de surface pour un composant optique.

**16.** Composant optique, comprenant la feuille adhésive sensible à la pression selon la revendication 14 ou 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011093956 A
- JP 2010143985 A
- WO 9314161 A
- JP 2004300269 A
- JP 2006008831 A
- JP 11000961 A
- JP 2001064607 A
- JP 2001131512 A
- JP 2003027026 A
- JP 3810490 B


### Non-patent literature cited in the description


- **W.C. GRIFFIN.** *J. Soc. Cosmetic Chemists,* 1949, vol. 1, 311
- Kaimen-Kasseizai Handobukku. Kogyo Tosho K. K, 25 November 1972, 179-182